(19) **Europäisches Patentamt / European Patent Office / Office européen des brevets**

(11) **EP 4 024 343 A1**

(12) **EUROPEAN PATENT APPLICATION**
published in accordance with Art. 153(4) EPC

(43) Date of publication:
**06.07.2022 Bulletin 2022/27**

(21) Application number: **20867313.7**

(22) Date of filing: **09.06.2020**

(51) International Patent Classification (IPC):
**G06T 17/00** (2006.01)   **G06N 3/02** (2006.01)

(52) Cooperative Patent Classification (CPC):
**G06N 3/02; G06N 3/04; G06T 17/00; G06T 19/00**

(86) International application number:
**PCT/CN2020/095157**

(87) International publication number:
**WO 2021/057091 (01.04.2021 Gazette 2021/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.09.2019 CN 201910901219**

(71) Applicant: **Huawei Technologies Co., Ltd.**
**Longgang District**
**Shenzhen,**
**Guangdong 518129 (CN)**

(72) Inventors:
• **SONG, Yi**
  **Shenzhen, Guangdong 518129 (CN)**
• **DI, Peiyun**
  **Shenzhen, Guangdong 518129 (CN)**
• **XIANG, Wei**
  **Redlynch, Queensland 4870 (AU)**
• **HAN, Kang**
  **Redlynch, Queensland 4870 (AU)**
• **WANG, Bing**
  **Redlynch, Queensland 4870 (AU)**

(74) Representative: **Maiwald Patent- und Rechtsanwaltsgesellschaft mbH**
**Elisenhof**
**Elisenstraße 3**
**80335 München (DE)**

(54) **VIEWPOINT IMAGE PROCESSING METHOD AND RELATED DEVICE**

(57)     A viewpoint image processing method and a related device are provided, and relate to the artificial intelligence/computer vision field. The method includes: obtaining a preset quantity of first viewpoint images (S1201); obtaining a geometric feature matrix between the preset quantity of first viewpoint images; generating an adaptive convolution kernel corresponding to each pixel of the preset quantity of first viewpoint images based on the geometric feature matrix and location information of a to-be-synthesized second viewpoint image, where the location information represents a viewpoint location of the second viewpoint image; generating the preset quantity of to-be-processed virtual composite pixel matrices based on the adaptive convolution kernels and the pixels of the preset quantity of existing viewpoint images (S1204); and synthesizing the second viewpoint image by using the preset quantity of to-be-processed virtual composite pixel matrices (S1205). The method can improve efficiency and quality of synthesizing the second viewpoint image.

Method 1200

S1201: Obtain a preset quantity of first viewpoint images

S1202: Obtain a cross-correlation feature matrix between the preset quantity of existing viewpoint images

S1203: Generate an adaptive convolution kernel corresponding to each pixel of the preset quantity of existing viewpoint images based on the cross-correlation feature matrix and location information of a to-be-synthesized second viewpoint image

S1204: Generate the preset quantity of to-be-processed virtual pixel matrices based on the adaptive convolution kernels and the pixels of the preset quantity of existing viewpoint images

S1205: Synthesize the second viewpoint image based on the preset quantity of to-be-processed virtual pixel matrices

FIG. 12

## Description

This application claims priority to Chinese Patent Application No. 2019109012191, filed with the China National Intellectual Property Administration on September 23, 2019 and entitled "VIEWPOINT IMAGE PROCESSING METHOD AND RELATED DEVICE", which is incorporated herein by reference in its entirety.

## TECHNICAL FIELD

The present invention relates to the field of image processing technologies, and in particular, to a viewpoint image processing method and a related device.

## BACKGROUND

Multi-viewpoint image data is image or video data that is obtained from a plurality of viewing angles by using a plurality of video or image capture devices. For example, during shooting of virtual reality video content, a plurality of cameras may be used to shoot videos at different locations to obtain multi-viewpoint image data. Then, image processing is performed on the multi-viewpoint image data by a computer to obtain a virtual viewpoint image, so as to create virtual reality video experience for a user.

Due to limitations of pixels of an existing image sensor or hardware costs, an existing shooting device cannot achieve both relatively high spatial resolution (resolution of a single viewpoint image) and angular resolution (a quantity of viewpoint images). Therefore, to resolve this problem, an effective way is to obtain multi-viewpoint image data with relatively high spatial resolution and a relatively small quantity of viewpoint images through shooting and synthesize a virtual viewpoint image by using a viewpoint image synthesis technology, to reconstruct free viewpoint image data with high spatial resolution.

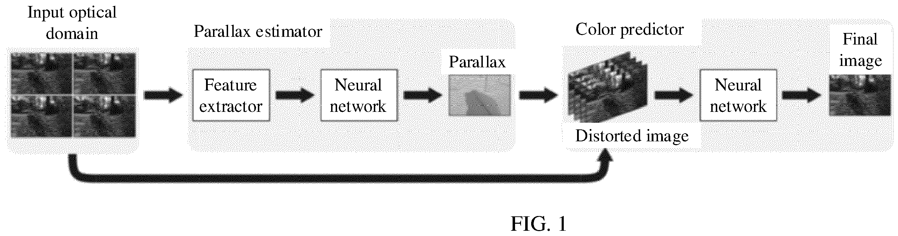

In a conventional technology, methods for synthesizing a virtual viewpoint image include, for example, solutions shown in FIG. 1, FIG. 2, and FIG. 3. In the solution shown in FIG. 1, depth information of existing viewpoint images is extracted and used as a training feature of a convolutional neural network (convolutional neural network, CNN), and a virtual viewpoint image is synthesized through prediction by using the CNN. However, in this solution, the virtual viewpoint image is synthesized by using the depth information of the existing viewpoint images as the training feature, and it is quite difficult to ensure accuracy of the obtained depth information. Therefore, quality of the synthesized virtual viewpoint image is relatively low. In addition, in this solution, each time a virtual viewpoint image is to be synthesized, features of existing viewpoint images need to be re-extracted, and then an entire synthesis network needs to be operated. Consequently, efficiency of synthesizing the virtual viewpoint image is relatively low.

It should be noted that, the existing viewpoint image is an image actually shot at a location in space by using a video or image capture device (for example, a camera, a video camera, or an image sensor). Specifically, a viewpoint image may also be referred to as a viewpoint. In addition, the virtual viewpoint image is an image obtained through virtual synthesis based-calculation without being actually shot by a video or image capture device.

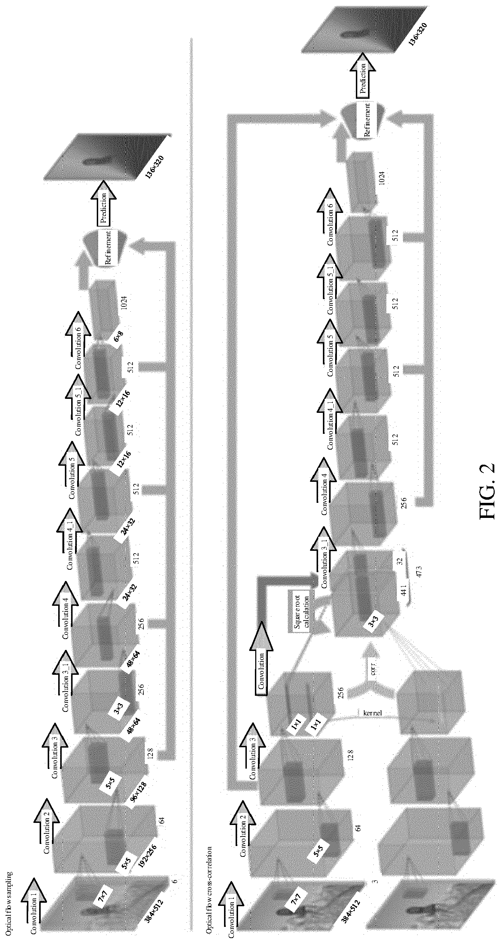

In the solution shown in FIG. 2, an optical flow between two viewpoint images is predicted through cross-correlation by using a CNN, and a virtual viewpoint image between the two viewpoint images is synthesized based on optical flow information. However, in this solution, only synthesis of a virtual viewpoint image between two existing viewpoint images can be performed, and the synthesized virtual viewpoint image can be located only on a one-dimensional connecting line between the two virtual viewpoint images. In addition, in this solution, it is difficult to estimate pixel-level optical flow information. If the solution is used in an application related to synthesis of a virtual viewpoint image, quality of an edge part of an object in the synthesized virtual viewpoint image is relatively low.

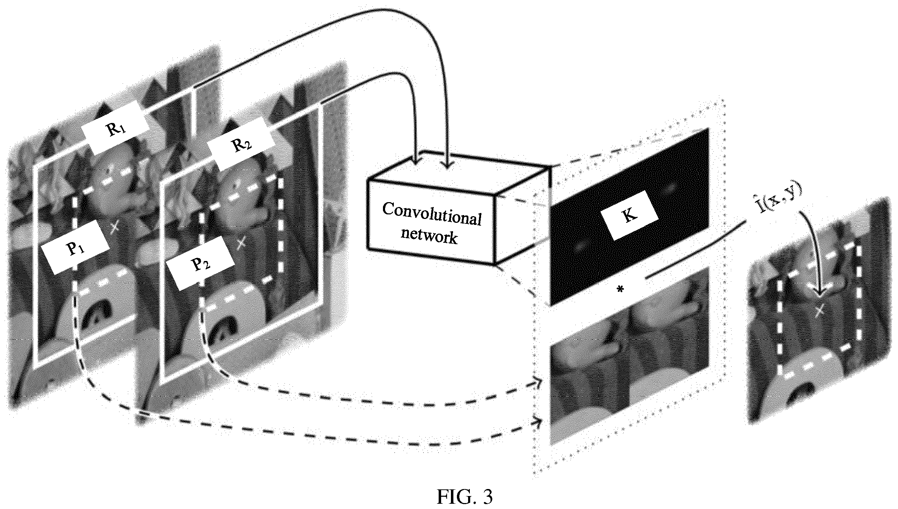

In the solution shown in FIG. 3, a viewpoint image between two viewpoint images is synthesized by using a CNN and an adaptive convolution kernel. However, in the solution, only the viewpoint image between the two one-dimensional viewpoint images can be generated. For a plurality of viewpoint images, the CNN needs to be repeatedly operated. Consequently, synthesis efficiency is relatively low.

In conclusion, how to improve synthesis efficiency while ensuring synthesis quality of a virtual viewpoint image is a technical problem that urgently needs to be resolved by a person skilled in the art.

## SUMMARY

Embodiments of this application disclose a viewpoint image processing method and a related device, to improve quality of a synthesized virtual viewpoint and improve synthesis efficiency.

According to a first aspect, an embodiment of this application discloses a viewpoint image processing method. The method includes:

obtaining at least two first viewpoint images, where the at least two first viewpoint images include images respectively captured at at least two viewpoint locations;

inputting the at least two first viewpoint images and location information of a to-be-synthesized second viewpoint image into a virtual viewpoint synthesis network, where the virtual viewpoint synthesis network is a network for synthesizing the second viewpoint image based on an adaptive convolution kernel corresponding to each pixel of the at least two first viewpoint images, the location information represents a viewpoint location of the second viewpoint image, the second viewpoint image is in a target area, and the target area includes an area formed by the at least two first viewpoint images; and

obtaining the second viewpoint image through calculation by using the virtual viewpoint synthesis network.

The first viewpoint image may be an existing viewpoint image, and the second viewpoint image may be a virtual viewpoint image. It should be noted that, the existing viewpoint image is an image actually shot at a location in space by using a video or image capture device (for example, a camera, a video camera, or an image sensor). Specifically, a viewpoint image may also be referred to as a viewpoint. In addition, the virtual viewpoint image is an image obtained through virtual synthesis-based calculation without being actually shot by a video or image capture device.

Based on the problems in the conventional technology that are described in FIG. 1, FIG. 2, and FIG. 3, in the present invention, an adaptive convolution kernel corresponding to the target virtual viewpoint is dynamically generated based on the location information of the virtual viewpoint that needs to be synthesized, to directly generate the corresponding viewpoint image. This implements synthesis of a virtual viewpoint at any location between the plurality of existing viewpoint images, and improves subjective quality and synthesis efficiency of the virtual viewpoint.

In one possible implementation, the obtaining the second viewpoint image through calculation by using the virtual viewpoint synthesis network includes:

obtaining a geometric feature matrix between the at least two first viewpoint images, where the geometric feature matrix is a matrix used to represent information about a geometric location relationship between pixels of the at least two first viewpoint images;

generating the adaptive convolution kernel corresponding to each pixel of the at least two first viewpoint images based on the geometric feature matrix and the location information;

generating at least two to-be-processed virtual composite pixel matrices based on the adaptive convolution kernels and the pixels of the at least two first viewpoint images; and

synthesizing the second viewpoint image by using the at least two to-be-processed virtual composite pixel matrices.

In one possible implementation, the obtaining a geometric feature matrix between the at least two first viewpoint images includes:

extracting a feature from each of the at least two first viewpoint images to obtain at least two feature matrices;

performing a cross-correlation operation on every two of the at least two feature matrices to obtain one or more feature matrices after the operation; and

when one feature matrix after the operation is obtained, using the feature matrix after the operation as the geometric feature matrix; or when a plurality of feature matrices after the operation are obtained, obtaining the geometric feature matrix through calculation based on the plurality of feature matrices after the operation.

In this embodiment of this application, information about a geometric location relationship between every two of the plurality of existing viewpoint images is represented as one geometric feature matrix, the virtual viewpoint may be synthesized by using effective information in all the existing viewpoint images in the geometric feature matrix, so as to achieve a better synthesis effect.

In one possible implementation, the obtaining a geometric feature matrix between the at least two first viewpoint images includes:

extracting a pixel from each of the at least two first viewpoint images to obtain at least two pixel matrices;

composing the at least two pixel matrices into a hybrid pixel matrix; and

inputting the hybrid pixel matrix into a first preset convolutional neural network model to obtain the geometric feature matrix.

In one possible implementation, the location information of the to-be-synthesized second viewpoint image is coordinate values, and the generating the adaptive convolution kernel corresponding to each pixel of the at least two first viewpoint images based on the geometric feature matrix and the location information of the to-be-synthesized second viewpoint image includes:

extending the coordinate values into a location matrix whose quantities of rows and columns are the same as those of the geometric feature matrix;

composing the location matrix and the geometric feature matrix into a hybrid information matrix;

inputting the hybrid information matrix into each of at least two second preset convolutional neural network models, where the at least two second preset convolutional neural network models have a same structure and different parameters; and

determining the adaptive convolution kernel corresponding to each pixel of the at least two first viewpoint images based on output results of the at least two second preset convolutional neural network models.

In this embodiment of this application, pixel interpolation and neighboring pixel sampling in the conventional technology are integrated by using an adaptive convolution kernel, to implicitly resolve an occlusion problem, so as to generate a higher-quality virtual viewpoint. The adaptive convolution kernel can be automatically adjusted based on location information of a to-be-synthesized viewpoint image to synthesize a corresponding virtual viewpoint according to a requirement, thereby improving flexibility of the conventional technology.

In one possible implementation, the generating at least two to-be-processed virtual composite pixel matrices based on the adaptive convolution kernels and the pixels of the at least two first viewpoint images includes:

performing convolution on the adaptive convolution kernel corresponding to each pixel of the at least two first viewpoint images and a pixel matrix with the pixel as a center in a one-to-one correspondence to obtain a virtual composite pixel corresponding to a pixel location of the pixel, where a quantity of rows of the pixel matrix is the same as that of the adaptive convolution kernel corresponding to the pixel, and a quantity of columns of the pixel matrix is the same as that of the adaptive convolution kernel corresponding to the pixel; and

composing the obtained virtual composite pixels into the at least two virtual composite pixel matrices.

In this embodiment of this application, the preliminary virtual composite pixel matrices representing the to-be-synthesized viewpoint image are first generated based on the plurality of existing viewpoint images and the adaptive convolution kernels, and then the final virtual viewpoint image is synthesized based on the generated preliminary virtual composite pixel matrices. In this way, quality of the synthesized viewpoint image can be improved.

According to a second aspect, an embodiment of this application provides a viewpoint image processing device. The device includes a processor, a transceiver, and a memory, where the memory is configured to store a computer program and/or data, and the processor is configured to execute the computer program stored in the memory, so that the device performs the following operations:

obtaining at least two first viewpoint images, where the at least two first viewpoint images include images respectively captured at at least two viewpoint locations;

inputting the at least two first viewpoint images and location information of a to-be-synthesized second viewpoint image into a virtual viewpoint synthesis network, where the virtual viewpoint synthesis network is a network for synthesizing the second viewpoint image based on an adaptive convolution kernel corresponding to each pixel of the at least two first viewpoint images, the location information represents a viewpoint location of the second viewpoint image, the second viewpoint image is in a target area, and the target area includes an area formed by the at least two first viewpoint images; and

obtaining the second viewpoint image through calculation by using the virtual viewpoint synthesis network.

In one possible implementation, the obtaining the second viewpoint image through calculation by using the virtual viewpoint synthesis network includes:

obtaining a geometric feature matrix between the at least two first viewpoint images, where the geometric feature matrix is a matrix used to represent information about a geometric location relationship between pixels of the at least two first viewpoint images;

generating the adaptive convolution kernel corresponding to each pixel of the at least two first viewpoint images based on the geometric feature matrix and the location information;

generating at least two to-be-processed virtual composite pixel matrices based on the adaptive convolution kernels and the pixels of the at least two first viewpoint images; and

synthesizing the second viewpoint image by using the at least two to-be-processed virtual composite pixel matrices.

In one possible implementation, the obtaining a geometric feature matrix between the at least two first viewpoint images includes:

extracting a feature from each of the at least two first viewpoint images to obtain at least two feature matrices;

performing a cross-correlation operation on every two of the at least two feature matrices to obtain one or more feature matrices after the operation; and

when one feature matrix after the operation is obtained, using the feature matrix after the operation as the geometric feature matrix; or when a plurality of feature matrices after the operation are obtained, obtaining the geometric feature matrix through calculation based on the plurality of feature matrices after the operation.

In one possible implementation, the obtaining a geometric feature matrix between the at least two first viewpoint images includes:

extracting a pixel from each of the at least two first viewpoint images to obtain at least two pixel matrices;

composing the at least two pixel matrices into a hybrid pixel matrix; and

inputting the hybrid pixel matrix into a first preset convolutional neural network model to obtain the geometric feature matrix.

In one possible implementation, the location information of the to-be-synthesized second viewpoint image is coordinate values, and the generating the adaptive convolution kernel corresponding to each pixel of the at least two first viewpoint images based on the geometric feature matrix and the location information of the to-be-synthesized second viewpoint image includes:

extending the coordinate values into a location matrix whose quantities of rows and columns are the same as those of the geometric feature matrix;

composing the location matrix and the geometric feature matrix into a hybrid information matrix;

inputting the hybrid information matrix into each of at least two second preset convolutional neural network models, where the at least two second preset convolutional neural network models have a same structure and different parameters; and

determining the adaptive convolution kernel corresponding to each pixel of the at least two first viewpoint images based on output results of the at least two second preset convolutional neural network models.

In one possible implementation, the generating at least two to-be-processed virtual composite pixel matrices based on the adaptive convolution kernels and the pixels of the at least two first viewpoint images includes:

performing convolution on the adaptive convolution kernel corresponding to each pixel of the at least two first viewpoint images and a pixel matrix with the pixel as a center in a one-to-one correspondence to obtain a virtual composite pixel corresponding to a pixel location of the pixel, where a quantity of rows of the pixel matrix is the same as that of the adaptive convolution kernel corresponding to the pixel, and a quantity of columns of the pixel matrix is the same as that of the adaptive convolution kernel corresponding to the pixel; and

composing the obtained virtual composite pixels into the at least two virtual composite pixel matrices.

According to a third aspect, an embodiment of this application provides a viewpoint image processing device. The device includes:

a first obtaining unit, configured to obtain at least two first viewpoint images, where the at least two first viewpoint images include images respectively captured at at least two viewpoint locations;

an input unit, configured to input the at least two first viewpoint images and location information of a to-be-synthesized second viewpoint image into a virtual viewpoint synthesis network, where the virtual viewpoint synthesis network is a network for synthesizing the second viewpoint image based on an adaptive convolution kernel corresponding to each pixel of the at least two first viewpoint images, the location information represents a viewpoint location of the second viewpoint image, the second viewpoint image is in a target area, and the target area includes an area formed by the at least two first viewpoint images; and

a calculation unit, configured to obtain the second viewpoint image through calculation by using the virtual viewpoint synthesis network.

In one possible implementation, the calculation unit includes:

a second obtaining unit, configured to obtain a geometric feature matrix between the at least two first viewpoint images, where the geometric feature matrix is a matrix used to represent information about a geometric location relationship between pixels of the at least two first viewpoint images;

a first generation unit, configured to generate the adaptive convolution kernel corresponding to each pixel of the at least two first viewpoint images based on the geometric feature matrix and the location information;

a second generation unit, configured to generate at least two to-be-processed virtual composite pixel matrices based on the adaptive convolution kernels and the pixels of the at least two first viewpoint images; and

a synthesis unit, configured to synthesize the second viewpoint image by using the at least two to-be-processed virtual composite pixel matrices.

In one possible implementation, the second obtaining unit includes:

an extraction unit, configured to extract a feature from each of the at least two first viewpoint images to obtain at least two feature matrices;

a cross-correlation operation unit, configured to perform a cross-correlation operation on every two of the at least two feature matrices to obtain one or more feature matrices after the operation; and

a calculation unit, configured to: when one feature matrix after the operation is obtained, use the feature matrix after the operation as the geometric feature matrix; or when a plurality of feature matrices after the operation are obtained, obtain the geometric feature matrix through calculation based on the plurality of feature matrices after the operation.

In one possible implementation, the second obtaining unit includes:

an extraction unit, configured to extract a pixel from each of the at least two first viewpoint images to obtain at least two pixel matrices;

a first composition unit, configured to compose the at least two pixel matrices into a hybrid pixel matrix; and

a first input unit, configured to input the hybrid pixel matrix into a first preset convolutional neural network model to obtain the geometric feature matrix.

In one possible implementation, the location information of the to-be-synthesized second viewpoint image is coordinate values, and the first generation unit includes: an extension unit, configured to extend the coordinate values into a location matrix whose quantities of rows and columns are the same as those of the geometric feature matrix;

a second composition unit, configured to compose the location matrix and the geometric feature matrix into a hybrid information matrix;

a second input unit, configured to input the hybrid information matrix into each of at least two second preset convolutional neural network models, where the at least two second preset convolutional neural network models have a same structure and different parameters; and

a determining unit, configured to determine the adaptive convolution kernel corresponding to each pixel of the at least two first viewpoint images based on output results of the at least two second preset convolutional neural network models.

In one possible implementation, the second generation unit includes:

a convolution unit, configured to perform convolution on the adaptive convolution kernel corresponding to each pixel of the at least two first viewpoint images and a pixel matrix with the pixel as a center in a one-to-one correspondence to obtain a virtual composite pixel corresponding to a pixel location of the pixel, where a quantity of rows of the pixel matrix is the same as that of the adaptive convolution kernel corresponding to the pixel, and a quantity of columns of the pixel matrix is the same as that of the adaptive convolution kernel corresponding to the pixel; and

a third composition unit, configured to compose the obtained virtual composite pixels into the at least two virtual composite pixel matrices.

According to a fourth aspect, an embodiment of this application provides a computer-readable storage medium, where the computer-readable storage medium stores a computer program, and the computer program is executed by a processor to implement the method according to any one of the possible implementations of the first aspect.

According to a fifth aspect, an embodiment of this application provides a chip. The chip includes a central processing unit, a neural network processor, and a memory, and the apparatus is configured to perform the method according to any one of the possible implementations of the first aspect.

According to a sixth aspect, an embodiment of the present invention provides a computer program. When the computer program is run on a computer, the computer is enabled to perform the methods described in the first aspect.

According to a seventh aspect, an embodiment of this application further provides a method for training a virtual viewpoint synthesis network. The viewpoint image processing method according to any one of the possible implementations of the first aspect can be implemented by using the virtual viewpoint synthesis network. The training method includes:

obtaining a plurality of existing viewpoint images and location information of a to-be-synthesized virtual viewpoint image;

obtaining a pixel matrix of each of the plurality of existing viewpoint images;

obtaining a geometric feature matrix through calculation based on the obtained pixel matrices;

generating, based on the geometric feature matrix and the location information of the to-be-synthesized virtual viewpoint, a plurality of to-be-processed virtual composite pixel matrices whose quantity is the same as that of the plurality of existing viewpoint images;

synthesizing the virtual viewpoint image based on the plurality of to-be-processed virtual composite pixel matrices;

calculating, by using a loss function, a loss value between the synthesized virtual viewpoint image and an image that is actually shot at a location of the to-be-synthesized virtual viewpoint image, and adaptively adjusting parameters of convolutional neural network models in a representation network, a generation network, and a correction network based on the loss value; and

continually repeating operations of the foregoing steps until a loss value between a virtual viewpoint image finally output by the entire virtual viewpoint synthesis network and an actual image at a location corresponding to the virtual viewpoint image is less than a threshold.

To sum up, based on the problems in the conventional technology that are described in FIG. 1, FIG. 2, and FIG. 3, in the present invention, the features of the plurality of existing viewpoint images are represented as one complete geometric feature matrix by using a spatial relationship between the plurality of existing viewpoint images. This implements representation of the information about the geometric location relationship between the plurality of existing viewpoint images. On this basis, in the present invention, the adaptive convolution kernel corresponding to the target virtual viewpoint is dynamically generated based on the location information of the virtual viewpoint that needs to be synthesized, to directly generate the corresponding viewpoint. This implements synthesis of a virtual viewpoint at any location between the plurality of existing viewpoint images, and improves subjective quality and synthesis efficiency of the virtual viewpoint.

## BRIEF DESCRIPTION OF DRAWINGS

The following briefly describes the accompanying drawings for embodiments of the embodiments of this application.

FIG. 1 is a schematic diagram of a method for generating a virtual viewpoint image in a conventional technology;

FIG. 2 is a schematic diagram of another method for generating a virtual viewpoint image in a conventional technology;

FIG. 3 is a schematic diagram of another method for generating a virtual viewpoint image in a conventional technology;

FIG. 4 is a schematic diagram of a structure of a scenario to which a viewpoint image processing method according to an embodiment of this application is applied;

FIG. 5 is a schematic diagram of a structure of another scenario to which a viewpoint image processing method according to an embodiment of this application is applied;

FIG. 6 is a schematic diagram of a structure of another scenario to which a viewpoint image processing method according to an embodiment of this application is applied;

FIG. 7 is a schematic diagram of a structure of a system used in a viewpoint image processing method according to an embodiment of this application;

FIG. 8 is a schematic diagram of a structure of a convolutional neural network used in a viewpoint image processing method according to an embodiment of this application;

FIG. 9 is a schematic diagram of a structure of chip hardware used in a viewpoint image processing method according to an embodiment of this application;

FIG. 10 is a schematic flowchart of a method for training a virtual viewpoint synthesis network according to an embodiment of this application;

FIG. 11 is a schematic diagram of a structure of a virtual viewpoint synthesis network according to an embodiment of this application;

FIG. 12 is a schematic flowchart of a viewpoint image processing method according to an embodiment of this application;

FIG. 13 is a schematic diagram of a relationship between a plurality of existing viewpoint images according to an embodiment of this application;

FIG. 14 is a schematic diagram of a process of performing an operation by using a generation network according to an embodiment of this application;

FIG. 15 is a schematic diagram of a virtual structure of a viewpoint image processing device according to an embodiment of this application;

FIG. 16 is a schematic diagram of a structure of an apparatus for training a virtual viewpoint synthesis network according to an embodiment of this application; and

FIG. 17 is a schematic diagram of a physical structure of a viewpoint image processing device according to an embodiment of this application.

## DESCRIPTION OF EMBODIMENTS

The following describes the embodiments of the present invention with reference to the accompanying drawings in the embodiments of the present invention.

A viewpoint image processing method provided in the embodiments of this application can be applied to scenarios such as virtual viewpoint synthesis of light field video content, viewpoint image synthesis of video content shot by a plurality of image or video capture devices, and video frame interpolation.

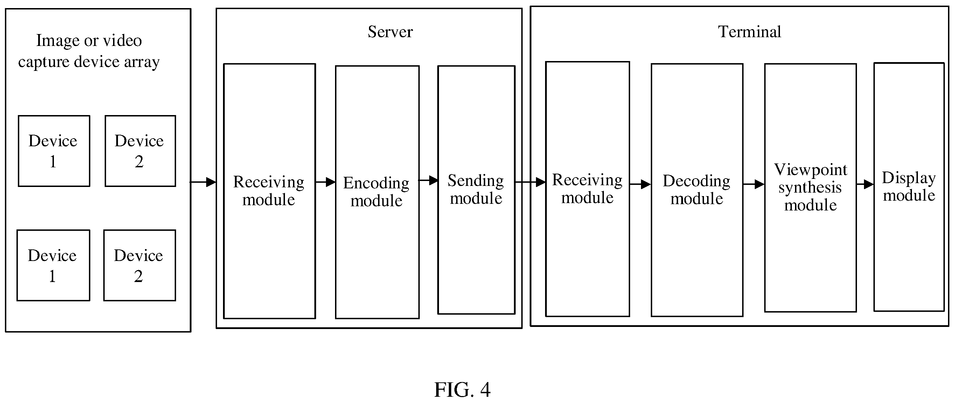

In a specific application scenario, after an image or video capture device array shoots light field videos, a server obtains the videos, encodes the videos, and transmits encoded videos to a terminal such as a VR display helmet; and the VR display helmet synthesizes, based on a location that is of a to-be-synthesized viewpoint image and that is obtained by a location sensor in the helmet, the corresponding viewpoint image according to the viewpoint image processing method provided in the embodiments of this application, and then displays the synthesized viewpoint image to a user for viewing. For details thereof, refer to FIG. 4. The image or video capture device array includes four devices. The four devices may form a rectangular array. The four devices send captured videos or images to the server. After receiving the videos or images, a receiving module of the server transmits the received videos or images to an encoding module for encoding, and then the server sends encoded videos or images to the terminal by using a sending module. After receiving the data sent by the server, the terminal decodes the data by using a decoding module, and then a viewpoint synthesis module of the terminal synthesizes, based on decoded data and obtained location information of a to-be-synthesized viewpoint image, the corresponding viewpoint image by using the viewpoint image processing method provided in the embodiments of this application. Then, the terminal displays the synthesized viewpoint image to the user by using a display module. It should be noted that, because a video includes a number of frames of images, a corresponding virtual viewpoint image may also be synthesized by using the viewpoint image processing method provided in the embodiments of this application.

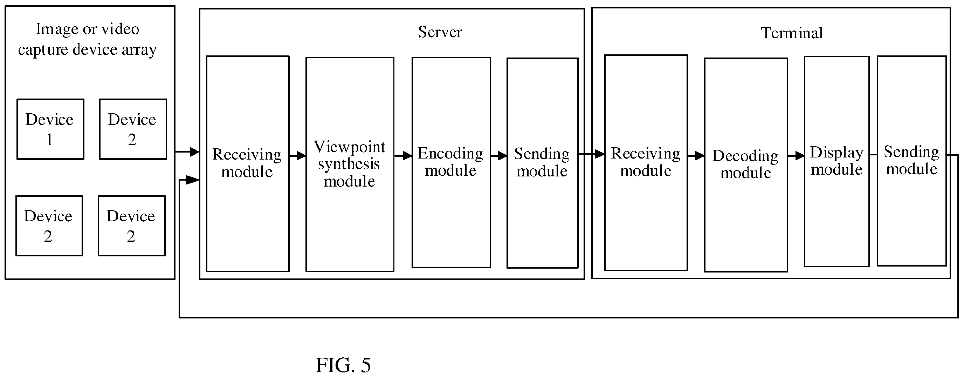

Alternatively, after an image or video capture device array shoots light field videos, a server obtains the videos and also obtains location information that is of a to-be-synthesized viewpoint image and that is sent by a terminal, synthesizes the corresponding viewpoint according to the viewpoint image processing method provided in the embodiments of this application, encodes the synthesized viewpoint image, and transmits an encoded viewpoint image to the terminal. Then, the terminal decodes the encoded viewpoint image to display the synthesized viewpoint image to a user for viewing. For details thereof, refer to FIG. 5. The image or video capture device array includes four devices. The four devices may form a rectangular array. The four devices send captured videos or images to the server. After a receiving module of the server receives location information that is of a to-be-synthesized viewpoint image and that is sent by a sending module of the terminal, the server synthesizes, based on the captured videos or images and the location information of the to-be-synthesized viewpoint image, the corresponding viewpoint image by using a viewpoint synthesis module, encodes the synthesized viewpoint image by using an encoding module, and sends encoded data to the terminal by using a sending module. After receiving the data sent by the server, the terminal obtains original image data of the synthesized viewpoint image through decoding by using a decoding module, and then displays the synthesized viewpoint image to the user by using a display module.

In the foregoing application scenario, the virtual viewpoint image is synthesized according to this solution, so as to improve synthesis efficiency and quality of the synthesized viewpoint image.

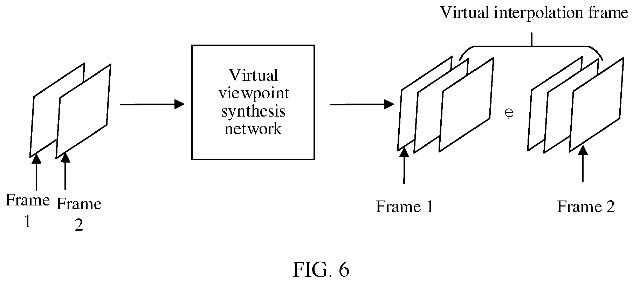

In another specific application scenario, the viewpoint image processing method provided in the embodiments of this application is applied to video frame interpolation. By using the viewpoint image processing method provided in the embodiments of this application, a video with a high frame rate can be synthesized by using a video with a low frame rate. Specifically, a video with a low frame rate is obtained, two video frames (that is, frame images) on which video interpolation needs to be performed are specified, and then a plurality of virtual frames between the two video frames are synthesized by using the viewpoint image processing method provided in the embodiments of this application, so as to obtain a video output with a high frame rate. For details thereof, refer to FIG. 6. The two specified video frames are a frame 1 and a frame 2. The frame 1 and the frame 2 are input into a virtual viewpoint synthesis network corresponding to the viewpoint image processing method provided in the embodiments of this application. A plurality of virtual interpolation frames are generated by using the network to finally obtain a video with a high frame rate.

In the foregoing application scenario, compared with depth information-based interpolation, in the viewpoint image processing method provided in the embodiments of this application, a more natural object edge and less noise can be obtained. In addition, a generated adaptive convolution kernel (which is described in detail below and is not described in detail temporarily herein) in the embodiments of this application can be automatically adapted based on location information of a virtual video frame, so that any frame between two video frames can be synthesized. This resolves an existing problem that only a virtual frame at a middle location between two video frames can be synthesized based on adaptive convolution, and improves video interpolation efficiency.

The following describes, from a model training side and a model application side, the method provided in this application.

A method for training a virtual viewpoint synthesis network provided in the embodiments of this application relates to computer vision processing, may be specifically applied to data processing methods such as data training, machine learning, and deep learning, and is used for performing symbolic and formal intelligent information modeling, extraction, preprocessing, training, and the like on training data (for example, an image pixel matrix in this application), to finally obtain a trained virtual viewpoint synthesis network. In addition, the trained virtual viewpoint synthesis network may be used in the viewpoint image processing method provided in the embodiments of this application. To-be-input data (for example, pixel matrices of at least two existing viewpoint images and location information of a to-be-synthesized virtual viewpoint image in this application) is input into the trained virtual viewpoint synthesis network to obtain output data (for example, a virtual viewpoint image in this application). It should be noted that the method for training the virtual viewpoint synthesis network and the viewpoint image processing method that are provided in the embodiments of this application are inventions generated based on a same idea, and may also be understood as two parts of a system, or two stages of an entire process, for example, a model training stage and a model application stage.

It should be noted that, the existing viewpoint image is an image actually shot at a location in space by using a video or image capture device (for example, a camera, a video camera, or an image sensor). In addition, the virtual viewpoint image is an image obtained through virtual synthesis-based calculation without being actually shot by a video or image capture device.

Because the embodiments of this application relate to applications of a large quantity of neural networks, for ease of understanding, the following first describes related terms and concepts such as "neural network" in the embodiments of this application.

(1) Neural network

The neural network may include a neuron. The neuron may be an operation unit that uses $x_s$ and an intercept of 1 as input. Output of the operation unit may be as follows:

$$h_{W,b}\left(x\right) = f\left(W^T x\right) = f(\sum\nolimits_{s=1}^{n} W_s x_s + b) \tag{1-1}$$

s=1, 2, ..., and n, n is a natural number greater than 1, Ws is a weight of $x_s$, and b is a bias of a neuron, f represents an activation function (activation function) of the neuron, where the activation function is used to introduce a non-linear characteristic into the neural network, to convert an input signal in the neuron into an output signal. The output signal of the activation function may be used as an input of a next convolution layer. The activation function may be a sigmoid function. The neural network is a network formed by joining many single neurons together. To be specific, an output of a neuron may be an input of another neuron. Input of each neuron may be connected to a local receptive field of a previous layer to extract a feature of the local receptive field. The local receptive field may be a region including several neurons.

(2) Deep neural network

The deep neural network (deep neural network, DNN) is also referred to as a multi-layer neural network, and may be understood as a neural network having many hidden layers. There is no special measurement criterion for the "many" herein. Based on locations of different layers in the DNN, a neural network in the DNN may be divided into three types: an input layer, a hidden layer, and an output layer. Generally, the first layer is the input layer, the last layer is the output layer, and the middle layer is the hidden layer. Layers are fully connected. To be specific, any neuron at an $i^{th}$ layer is necessarily connected to any neuron at an $(i + 1)^{th}$ layer. The DNN appears to be quite complex, but an operation of each layer is not complex actually. To put it simply, the DNN is represented by the following linear relation expression: $\vec{y} = \alpha(W\vec{x}+\vec{b})$, where $\vec{x}$ is an input vector, $\vec{y}$ is an output vector, $\vec{b}$ is an offset vector, $W$ is a weight matrix (also referred to as a coefficient), and $\alpha()$ is an activation function. At each layer, the output vector $\vec{y}$ is obtained by performing such a simple operation on the input vector $\vec{x}$. Because the DNN includes a large quantity of layers, there are a large quantity of coefficients W and a large quantity of offset vectors $\vec{b}$. Definitions of the parameters in the DNN are as follows: The coefficient W is used as an example. It is assumed that in a DNN with three layers, a linear coefficient from the fourth neuron at the second layer to the second neuron at the third layer is defined as $W_{24}^{3}$. The superscript 3 represents a layer at which the coefficient $W$ is located, and the subscript corresponds to an output third-layer index 2 and an input second-layer index 4. In conclusion, a coefficient from the $k^{th}$ neuron at the $(L-1)^{th}$ layer to the $j^{th}$ neuron at the $L^{th}$ layer is defined as $W_{jk}^{L}$. It should be noted that there is no parameter $W$ at the input layer. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of a trained deep neural network (a weight matrix formed by vectors W at many layers).

(3) Convolutional neural network

The convolutional neural network (convolutional neuron network, CNN) is a deep neural network with a convolutional structure. The convolutional neural network includes a feature extractor consisting of a convolutional layer and a sub sampling layer. The feature extractor may be considered as a filter. A convolution process may be considered as performing convolution by using a trainable filter and an input image or a convolution feature map (feature map). The convolutional layer is a neuron layer that performs convolution processing on an input signal in the convolutional neural network. At the convolutional layer of the convolutional neural network, one neuron may be connected to only a part of neurons at a neighboring layer. A convolutional layer generally includes several feature maps, and each feature map may include some neurons arranged in a rectangle. Neurons of a same feature map share a weight, and the shared weight herein is a convolution kernel. Sharing the weight may be understood as that a manner of extracting image information is unrelated to a location. The principles implied herein are that statistical information of a part of an image is the same as that of another part. To be specific, image information that is learned in a part can also be used in another part. Therefore, same learned image information can be used for all locations in the image. At a same convolutional layer, a plurality of convolution kernels may be used to extract different image information. Usually, a larger quantity of convolution kernels indicates richer image information reflected by a convolution operation.

The convolution kernel may be initialized in a form of a matrix of a random size. In a training process of the convolutional neural network, an appropriate weight may be obtained for the convolution kernel through learning. In addition, sharing the weight is advantageous because connections between layers of the convolutional neural network are reduced, and a possibility of overfitting is reduced.

(4) Recurrent neural network

A recurrent neural network (recurrent neural network, RNN) is used to process sequence data. In a conventional neural network model, from an input layer to a hidden layer and then to an output layer, the layers are fully connected, but nodes at each layer are not connected. Such a common neural network resolves many problems, but is still incapable of resolving many other problems. For example, to predict a next word in a sentence, a previous word usually needs to be used, because adjacent words in the sentence are not independent. A reason why the RNN is referred to as a recurrent neural network is that current output of a sequence is related to previous output. A specific representation form is that the network memorizes previous information and applies the previous information to calculation of the current output. To be specific, nodes in the hidden layer are no longer unconnected, but are connected, and input for the hidden layer includes not only output of the input layer but also output of the hidden layer at a previous moment. Theoretically, the RNN can process sequence data of any length. Training of the RNN is the same as training of a conventional CNN or DNN. An error back propagation algorithm is used, but there is a difference: If the RNN is expanded, a parameter such as W of the RNN is shared, and this is different from that in the conventional neural network described above by using an example. In addition, during use of a gradient descent algorithm, an output in each step depends not only on a network in the current step, but also on a network status in several previous steps. The learning algorithm is referred to as a backpropagation through time (back propagation through time, BPTT) algorithm

A reason why the recurrent neural network is required when there is already the convolutional neural network is simple. In the convolutional neural network, there is a premise that elements are independent of each other, and input and output are also independent, such as a cat and a dog. However, many elements are interconnected in the real world. For example, stocks change over time. For another example, a person says: I like traveling, a most favorite place is Yunnan, and I will go there in the future if there is a chance. If there is a blank to be filled herein, people should know that "Yunnan" is to be filled in. This is because people can make an inference from a context, but how can a machine do this? The RNN emerges. The RNN is designed to enable a machine to have a capability to remember like human beings. Therefore, output of the RNN depends on current input information and historical memory information.

(5) Loss function

In a process of training the deep neural network, because it is expected that an output of the deep neural network is as much as possible close to a predicted value that is actually expected, a predicted value of a current network and a target value that is actually expected may be compared, and then a weight vector of each layer of the neural network is updated based on a difference between the predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain, through comparison, the difference between the predicted value and the target value" needs to be predefined. This is the loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the deep neural network is a process of minimizing the loss as much as possible.

(6) Back propagation algorithm

The convolutional neural network may correct a value of a parameter in an initial super-resolution model in a training process according to an error back propagation (back propagation, BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to make the error loss converge. The back propagation algorithm is an error-losscentered back propagation motion intended to obtain a parameter, such as a weight matrix, of an optimal super-resolution model.

(7) Pixel value

A pixel value of an image may be a red green blue (RGB) color value, and the pixel value may be a long integer representing a color. For example, the pixel value is 256*Red + 100*Green + 76Blue, where Blue represents a blue component, Green represents a green component, and Red represents a red component. In each color component, a smaller value indicates lower brightness, and a larger value indicates higher brightness. For a grayscale image, a pixel value may be a grayscale value.

The following describes a system architecture provided in the embodiments of this application.

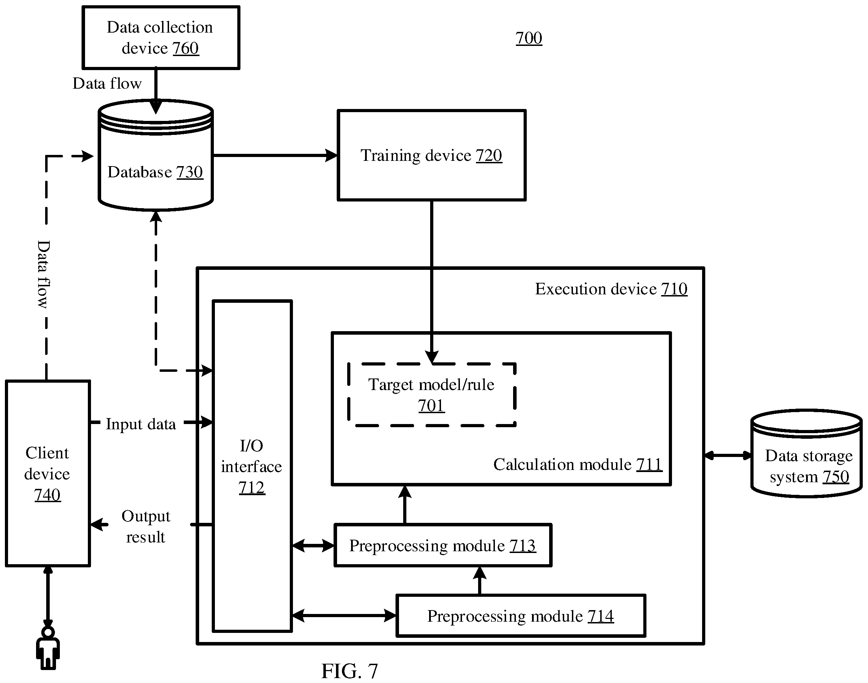

Refer to FIG. 7. An embodiment of the present invention provides a system architecture 700. As shown in the system architecture 700, a data collection device 760 is configured to collect training data. In this embodiment of this application, the training data includes a plurality of viewpoint images used as training features, a plurality of viewpoint images used as user tags, and location information corresponding to the plurality of viewpoint images used as user tags. The plurality of viewpoint images used as training features may be images that are in images shot by an m*m (m is an integer greater than or equal to 2) rectangular video or image capture device (for example, a camera, a video camera, or an image sensor) array and that are shot by video or image capture devices at four vertexes of the m*m rectangular video or image capture device array. (m*m-4) images other than the images at the four vertexes are the viewpoint images used as user tags. Information about spatial locations of video or image capture devices corresponding to the (m*m-4) images is the location information corresponding to the viewpoint images used as user tags. The location information may be two-dimensional coordinates or three-dimensional coordinates. Alternatively, the plurality of viewpoint images used as training features may be images that are in images shot by m (m is an integer greater than or equal to 2) video or image capture devices on a straight line and that are shot by video or image capture devices at two end points. (m-2) images other than the images at the two end points are used as the viewpoint images used as user tags. Information about spatial locations of video or image capture devices corresponding to the (m-2) images is used as the location information corresponding to the viewpoint images used as user tags. Alternatively, the plurality of viewpoint images used as training features may be images that are in images shot by another polygonal array including m (m is an integer greater than 2) video or image capture devices and that are shot by video or image capture devices at vertexes of the polygonal array. Images other than the images at the plurality of vertexes are the viewpoint images used as user tags. Information about spatial locations of video or image capture devices corresponding to the other images is the location information corresponding to the viewpoint images used as user tags. Certainly, during training, a plurality of groups of the following data may be input for training: the plurality of viewpoint images used as training features, the plurality of viewpoint images used as user tags, and the location information corresponding to the plurality of viewpoint images used as user tags, so as to achieve higher precision and accuracy.

Then, the training data is stored in a database 730. A training device 720 obtains a target model/rule 701 (which is explained as follows: 701 herein is a model obtained through training at the training stage described above, and may be a network used for virtual viewpoint synthesis, or the like) through training based on the training data maintained in the database 730. With reference to Embodiment 1, the following describes in more detail how the training device 720 obtains the target model/rule 701 based on the training data. The target model/rule 701 can be used to implement the viewpoint image processing method provided in the embodiments of this application. To be specific, related preprocessing is performed on at least two existing viewpoint images and location information of a to-be-synthesized virtual viewpoint image, and preprocessed viewpoint images and location information are input into the target model/rule 701 to obtain a virtual viewpoint image. The target model/rule 701 in this embodiment of this application may be specifically a virtual viewpoint synthesis network. It should be noted that, in actual application, the training data maintained in the database 730 may not all be captured by the data collection device 760, or may be received and obtained from another device. It should be further noted that the training device 720 may not necessarily train the target model/rule 701 completely based on the training data maintained in the database 730, or may obtain training data from a cloud or another place to perform model training. The foregoing description should not be construed as a limitation on the embodiments of this application.

It should be noted that, the existing viewpoint image is an image actually shot at a location in space by using a video or image capture device (for example, a camera, a video camera, or an image sensor). Specifically, a viewpoint image may also be referred to as a viewpoint.

In addition, the virtual viewpoint image is an image obtained through virtual synthesis-based calculation without being actually shot by a video or image capture device.

The target model/rule 701 obtained by the training device 720 through training may be applied to different systems or devices, for example, applied to an execution device 710 shown in FIG. 7. The execution device 710 may be a terminal, for example, a mobile phone terminal, a tablet computer, a notebook computer, an AR/VR terminal, or a vehicle-mounted terminal, or may be a server, a cloud, or the like. In FIG. 7, an I/O interface 712 is configured on the execution device 710 for performing data exchange with an external device. A user may input data to the I/O interface 712 by using a client device 740. In this embodiment of this application, the input data may include location information of a to-be-synthesized virtual viewpoint. The information may be input by the user or automatically detected by the client device 740. A manner of obtaining the information is determined based on a specific case.

A preprocessing module 713 is configured to perform preprocessing based on the input data (for example, the plurality of existing viewpoint images) received by the I/O interface 712. In this embodiment of this application, the preprocessing module 713 may be configured to obtain pixel matrices of the plurality of existing viewpoint images, or the like.

In a process in which the execution device 710 performs preprocessing on the input data or the calculation module 711 of the execution device 710 performs related processing such as calculation, the execution device 710 may invoke data, a computer program, and the like in a data storage system 750 for corresponding processing, and may also store data, instructions, and the like obtained through corresponding processing into the data storage system 750.

Finally, the I/O interface 712 returns a processing result, for example, the virtual viewpoint image obtained in the foregoing to the client device 740, to provide the virtual viewpoint image to the user.

It should be noted that the training device 720 may generate corresponding target models/rules 701 for different objectives or different tasks based on different training data. The corresponding target models/rules 701 may be used to implement the foregoing objectives or complete the foregoing tasks, to provide a desired result for the user.

In a case shown in FIG. 7, the user may manually provide the input data. The data may be manually provided in a user interface provided by the I/O interface 712. In another case, the client device 740 may automatically send input data to the I/O interface 712. If it is required that the client device 740 needs to obtain authorization from the user to automatically send the input data, the user may set corresponding permission on the client device 740. The user may view, on the client device 740, a result output by the execution device 710. Specifically, the result may be presented in a form of displaying, a sound, an action, or the like. The client device 740 may also serve as a data collector to collect, as new sample data, input data that is input into the I/O interface 712 and an output result that is output from the I/O interface 712 shown in the figure, and store the new sample data into the database 730. Certainly, the client device 740 may alternatively not perform collection, but the I/O interface 712 directly stores, as new sample data into the database 730, input data that is input into the I/O interface 712 and an output result that is output from the I/O interface 712 shown in the figure.

It should be noted that FIG. 7 is merely a schematic diagram of the system architecture provided in this embodiment of the present invention. A location relationship between the devices, the components, the modules, and the like shown in the figure does not constitute any limitation. For example, in FIG. 7, the data storage system 750 is an external memory relative to the execution device 710, but in another case, the data storage system 750 may alternatively be disposed in the execution device 710.

As shown in FIG. 7, the training device 720 performs training to obtain the target model/rule 701. The target model/rule 701 may be a virtual viewpoint synthesis network in this embodiment of this application. Specifically, the virtual viewpoint synthesis network provided in this embodiment of this application may include a representation network, a generation network, and a correction network. In the virtual viewpoint synthesis network provided in this embodiment of this application, the representation network, the generation network, and the correction network all may be convolutional neural networks.

As described in the foregoing basic concepts, the convolutional neural network is a deep neural network with a convolutional structure, and is a deep learning (deep learning) architecture. In the deep learning architecture, multi-layer learning is performed at different abstract levels according to a machine learning algorithm. As a deep learning architecture, the CNN is a feed-forward (feed-forward) artificial neural network, and each neuron in the feed-forward artificial neural network can respond to an image input into the feed-forward artificial neural network.

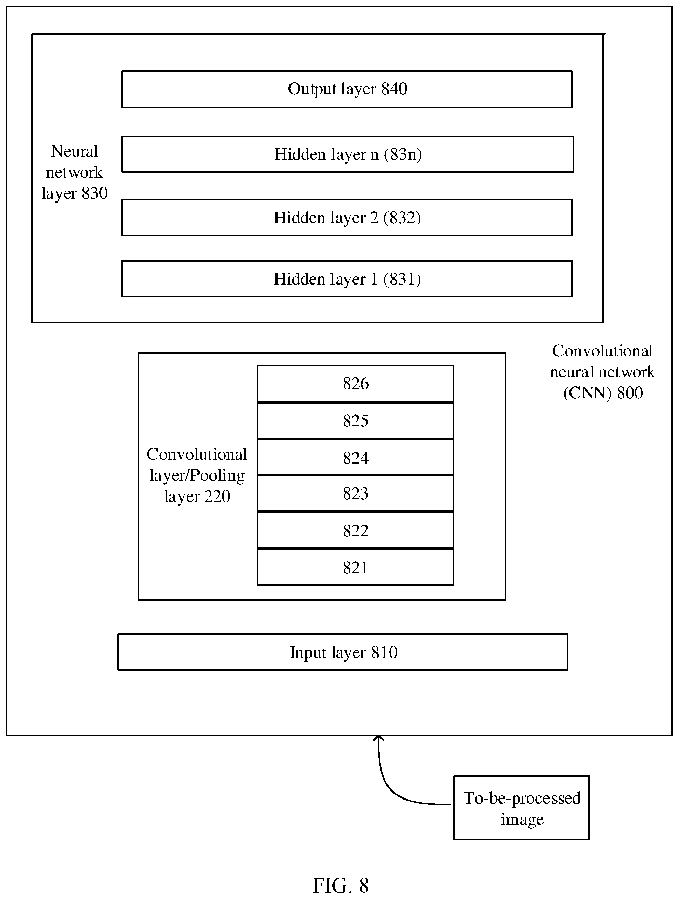

As shown in FIG. 8, a convolutional neural network (CNN) 800 may include an input layer 810, a convolutional layer/pooling layer 820 (the pooling layer is optional), and a neural network layer 830.

Convolutional layer/Pooling layer 820:

Convolutional layer:

As shown in FIG. 8, a convolutional layer/pooling layer 820 may include, for example, layers 821-826. For example, in one implementation, the layer 821 is a convolutional layer, the layer 822 is a pooling layer, the layer 823 is a convolutional layer, the layer 824 is a pooling layer, the layer 825 is convolutional layer, and the layer 826 is a pooling layer. In another implementation, the layers 821 and 822 are convolutional layers, the layer 823 is a pooling layer, the layers 824 and 825 are convolutional layers, and the layer 826 is a pooling layer. In other words, output of a convolutional layer may be used as input to a subsequent pooling layer, or may be used as input to another convolutional layer, to continue to perform a convolution operation.

The following describes internal working principles of the convolutional layer by using the convolutional layer 821 as an example.

The convolutional layer 821 may include a plurality of convolution operators. The convolution operator is also referred to as a kernel. During image processing, the convolution operator functions as a filter that extracts specific information from an input image matrix. The convolution operator may essentially be a weight matrix, and the weight matrix is usually predefined. In a process of performing a convolution operation on an image, the weight matrix usually processes pixels at a granularity level of one pixel (or two pixels, depending on a value of a stride (stride)) in a horizontal direction on an input image, to extract a specific feature from the image. A size of the weight matrix should be related to a size of the image. It should be noted that a depth dimension (depth dimension) of the weight matrix is the same as a depth dimension of the input image. During a convolution operation, the weight matrix extends to an entire depth of the input image. Therefore, a convolutional output of a single depth dimension is generated through convolution with a single weight matrix. However, in most cases, a single weight matrix is not used, but a plurality of weight matrices with a same size (rows $\times$ columns $\times$ channel quantity), namely, a plurality of sametype matrices, are applied. Outputs of the weight matrices are superimposed to form a depth dimension of a convolutional image. The dimension herein may be understood as being determined based on the foregoing "plurality". Different weight matrices may be used to extract different features from the image. For example, one weight matrix is used to extract edge information of the image, another weight matrix is used to extract a specific color of the image, and a further weight matrix is used to blur unneeded noise in the image. Sizes of the plurality of weight matrices (row quantity $\times$ column quantity $\times$ channel quantity) are the same, so that sizes of feature maps extracted by using the plurality of weight matrices with a same size are also the same. Then, the plurality of extracted feature maps with a same size are combined to form an output of a convolution operation.

Weight values in these weight matrices need to be obtained through a lot of training during actual application. Each weight matrix formed by using the weight values obtained through training may be used to extract information from an input image, to enable the convolutional neural network 800 to perform correct prediction.

It should be noted that, a size of a three-dimensional matrix in this embodiment of this application is usually represented by (row quantity $\times$ column quantity $\times$ channel quantity). Meanings of rows and columns herein are the same as those of rows and columns in a two-dimensional matrix, and the channel quantity herein is a quantity of two-dimensional matrices each including rows and columns. For example, if a size of a three-dimensional matrix is 3*4*5, it indicates that the matrix has three rows, four columns, and five channels. In this case, the five channels herein indicate that the three-dimensional matrix includes five two-dimensional matrices each with three rows and four columns.

When the convolutional neural network 800 has a plurality of convolutional layers, an initial convolutional layer (for example, the layer 821) usually extracts more general features, where the general features may also be referred to as low-level features. As a depth of the convolutional neural network 800 increases, a deeper convolutional layer (for example, the layer 826) extracts more complex features, such as high-level semantic features. Higher-level semantic features are more applicable to a problem to be resolved.

Pooling layer:

Because a quantity of training parameters usually needs to be reduced, a pooling layer usually needs to be periodically introduced after a convolutional layer. To be specific, for the layers 821 to 826 in the layer 820 shown in FIG. 8, one convolutional layer may be followed by one pooling layer, or a plurality of convolutional layers may be followed by one or more pooling layers. During image processing, the pooling layer is only used to reduce a space size of the image. The pooling layer may include an average pooling operator and/or a maximum pooling operator, to perform sampling on the input image to obtain an image with a relatively small size. The average pooling operator may be used to calculate pixel values in the image in a specific range, to generate an average value. The average value is used as an average pooling result. The maximum pooling operator may be used to select a pixel with a maximum value in a specific range as a maximum pooling result. In addition, similar to a case in which a size of a weight matrix at the convolutional layer needs to be related to a size of the image, an operator at the pooling layer also needs to be related to the size of the image. A size of a processed image output from the pooling layer may be less than a size of an image input to the pooling layer. Each pixel in the image output from the pooling layer represents an average value or a maximum value of a corresponding sub-region of the image input to the pooling layer.

Neural network layer 830:

After processing is performed by the convolutional layer/pooling layer 820, the convolutional neural network 800 still cannot output required output information. As described above, at the convolutional layer/pooling layer 820, only a feature is extracted, and parameters resulting from an input image are reduced. However, to generate final output information (required class information or other related information), the convolutional neural network 800 needs to use the neural network layer 830 to generate an output of one required class or outputs of a group of required classes. Therefore, the neural network layer 830 may include a plurality of hidden layers (831, 832, ..., and 83n shown in FIG. 8) and an output layer 840. Parameters included in the plurality of hidden layers may be obtained through pre-training based on related training data of a specific task type. For example, the task type may include image recognition, image classification, super-resolution image reconstruction, and the like.

At the neural network layer 830, the plurality of hidden layers are followed by the output layer 840, namely, the last layer of the entire convolutional neural network 800. The output layer 840 has a loss function similar to a categorical cross entropy, and the loss function is specifically configured to calculate a prediction error. Once forward propagation (for example, propagation in a direction from 810 to 840 in FIG. 8) of the entire convolutional neural network 800 is completed, back propagation (for example, propagation in a direction from 840 to 810 in FIG. 8) is started to update a weight value and a deviation of each layer mentioned above, to reduce a loss of the convolutional neural network 800 and an error between a result output by the convolutional neural network 800 by using the output layer and an ideal result.

It should be noted that the convolutional neural network 800 shown in FIG. 8 is merely an example of a convolutional neural network, and in specific application, the convolutional neural network may alternatively exist in a form of another network model.

The following describes a hardware structure of a chip provided in an embodiment of this application.

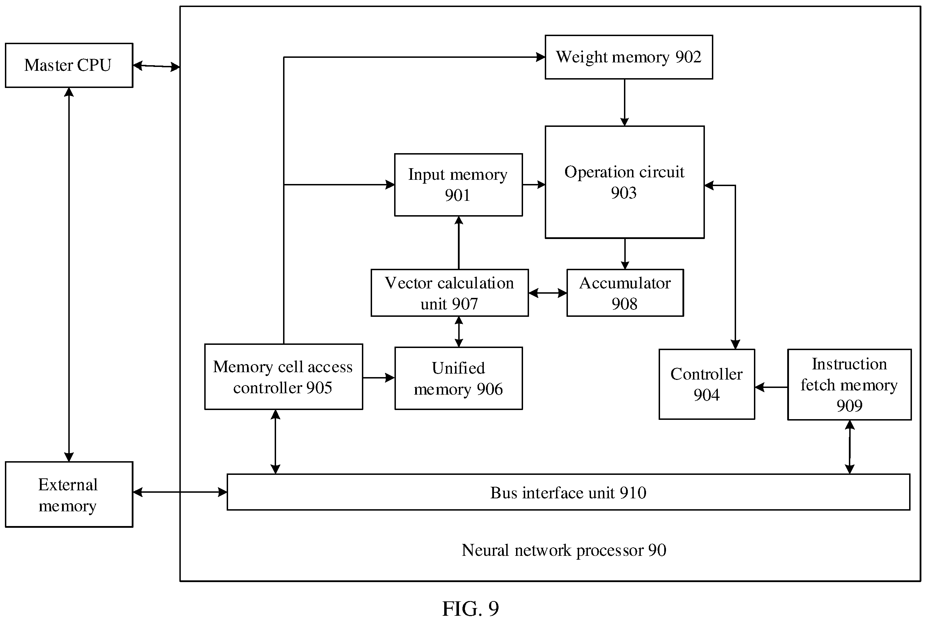

FIG. 9 shows a hardware structure of a chip according to an embodiment of the present invention. The chip includes a neural network processing unit 90. The chip may be disposed in the execution device 710 shown in FIG. 7, and is configured to complete calculation of the calculation module 711. The chip may alternatively be disposed in the training device 720 shown in FIG. 7, and is configured to complete training of the training device 720 and output the target module/rule 701. All algorithms of the layers in the convolutional neural network shown in FIG. 8 may be implemented in the chip shown in FIG. 9.

The neural network processor 90 may be any processor suitable for large-scale exclusive OR operation processing, for example, a neural-network processing unit (neural-network processing unit, NPU), a tensor processing unit (tensor processing unit, TPU), or a graphics processing unit (graphics processing unit, GPU). The NPU is used as an example. The NPU may be mounted, as a coprocessor, onto a host CPU (Host CPU), and the host CPU allocates a task to the NPU. A core part of the NPU is an operation circuit 903. The operation circuit 903 is controlled by a controller 904 to extract matrix data from memories (901 and 902) and perform multiplication and addition.

In some implementations, the operation circuit 903 includes a plurality of processing units (process engine, PE) inside. In some implementations, the operation circuit 903 is a two-dimensional systolic array. The operation circuit 903 may be a one-dimensional systolic array or another electronic circuit that can perform mathematical operations such as multiplication and addition. In some implementations, the operation circuit 903 is a general-purpose matrix processor.

For example, it is assumed that there are an input matrix A, a weight matrix B, and an output matrix C. The operation circuit 903 obtains weight data of the matrix B from the weight memory 902, and buffers the weight data on each PE in the operation circuit 903. The operation circuit 903 obtains input data of the matrix A from the input memory 901, performs a matrix operation based on the input data of the matrix A and the weight data of the matrix B, to obtain a partial result or a final result of the matrix, and stores the partial result or the final result into an accumulator (accumulator) 908.

A unified memory 906 is configured to store input data and output data. The weight data is directly transferred to the weight memory 902 by using a direct memory access controller (DMAC, direct memory access controller) 905. The input data is also transferred to the unified memory 906 by using the DMAC.

A bus interface unit (BIU, bus interface unit) 910 is used for interaction between the DMAC and an instruction fetch buffer (instruction fetch buffer) 909. The bus interface unit 901 is further used by the instruction fetch buffer 909 to obtain an instruction from an external memory. The bus interface unit 901 is further used by the storage unit access controller 905 to obtain original data of the input matrix A or the weight matrix B from the external memory.

The DMAC is mainly configured to transfer input data in an external memory DDR to the unified memory 906, or transfer the weight data to the weight memory 902, or transfer the input data to the input memory 901.

A vector calculation unit 907 includes a plurality of operation processing units, and if required, performs further processing such as vector multiplication, vector addition, an exponential operation, a logarithmic operation, or value comparison on an output of the operation circuit 903. The vector calculation unit 907 is mainly configured for calculation at a non-convolutional layer or a fully connected layer (FC, fully connected layers) of the neural network, and may specifically perform calculation in pooling (pooling), normalization (normalization), and the like. For example, the vector calculation unit 907 may apply a non-linear function to the output of the operation circuit 903, for example, to a vector of an accumulated value, so as to generate an activation value. In some implementations, the vector calculation unit 907 generates a normalized value, a combined value, or both.

In some implementations, the vector calculation unit 907 stores a processed vector into the unified memory 906. In some implementations, a vector processed by the vector calculation unit 907 can be used as an activation input to the operation circuit 903, for example, for use at a subsequent layer in the neural network. As shown in FIG. 8, if a current processing layer is a hidden layer 1 (831), the vector processed by the vector calculation unit 907 can also be used for calculation at a hidden layer 2 (832).

The instruction fetch buffer (instruction fetch buffer) 909 connected to the controller 904 is configured to store instructions used by the controller 904.

The unified memory 906, the input memory 901, the weight memory 902, and the instruction fetch buffer 909 are all on-chip memories. The external memory is independent of the hardware architecture of the NPU.

Operations at various layers in the convolutional neural network shown in FIG. 8 may be performed by the operation circuit 903 or the vector computation unit 907.

**Embodiment 1**

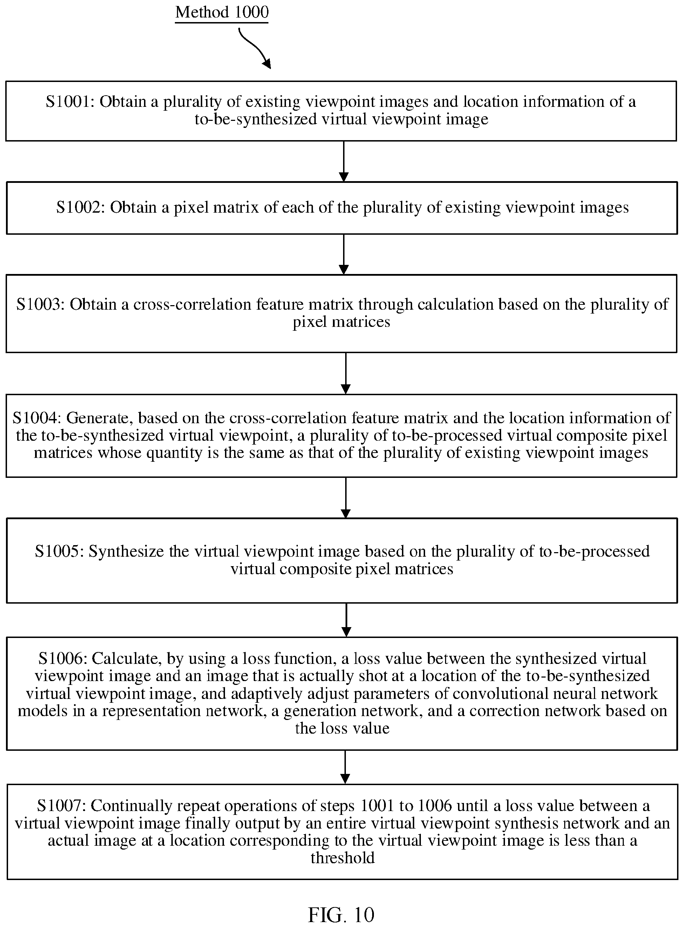

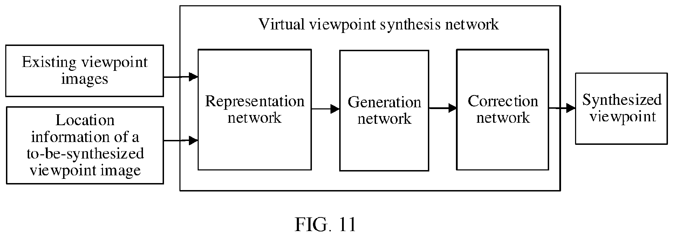

FIG. 10 shows a method 1000 for training a virtual viewpoint synthesis network according to Embodiment 1 of the present invention. For a schematic diagram of a structure of the virtual viewpoint synthesis network, refer to FIG. 11. In FIG. 11, the virtual viewpoint synthesis network includes three parts: a representation network, a generation network, and a correction network. The representation network is used to obtain features of input existing viewpoint images, and obtain, through calculation based on these features, a feature matrix representing information about a geometric location relationship between the input existing viewpoint images. The generation network is used to generate, based on the feature matrix, preliminary virtual composite pixel matrices representing a to-be-synthesized viewpoint. The correction network is used to generate a final output of the synthesized viewpoint based on the preliminary virtual composite pixel matrices representing the to-be-synthesized viewpoint.

The following describes the method for training the virtual viewpoint synthesis network. The method includes, but is not limited to, the following steps.

Step 1001: Obtain a plurality of existing viewpoint images and location information of a to-be-synthesized virtual viewpoint image.

Specifically, the plurality of existing viewpoint images are images used as training features. For a specific description of the images used as training features, refer to the description of the training data in the descriptions corresponding to FIG. 7. Details are not described herein again.

Step 1002: Obtain a pixel matrix of each of the plurality of existing viewpoint images.

Specifically, the pixel matrix may be a three-dimensional pixel matrix including pixel information of three channels R, G, and B. Alternatively, if an image is a grayscale image, an obtained pixel matrix may be a two-dimensional pixel matrix.

Step 1003: Obtain a geometric feature matrix through calculation based on the plurality of pixel matrices.

Specifically, the plurality of obtained pixel matrices are input into the representation network, and a geometric feature matrix representing information about a geometric location relationship between the plurality of existing viewpoint images is output. The representation network includes a convolutional neural network model for feature extraction and a feature calculation model. First, a feature matrix corresponding to each existing viewpoint is extracted based on the input pixel matrices by using the convolutional neural network model for feature extraction. Each extracted feature matrix may include one or more of the following feature information of a corresponding viewpoint image: a color feature, a texture feature, a shape feature, and a spatial relationship feature. Then, a cross-correlation operation is performed on every two of the plurality of feature matrices by using the calculation model, to obtain a plurality of matrices after the cross-correlation operation, and then the plurality of matrices after the cross-correlation operation are added up to obtain the geometric feature matrix.

Alternatively, the obtaining a geometric feature matrix through calculation based on the plurality of pixel matrices may be implemented in the following manner.

The plurality of obtained pixel matrices are composed into a three-dimensional hybrid pixel matrix according to a preset order (a specific composition manner is described in detail below and is not described in detail temporarily herein). Then, the hybrid pixel matrix is input into the representation network to output the geometric feature matrix. The representation network may include a convolutional neural network model used to calculate and output the geometric feature matrix based on the hybrid pixel matrix.

Step 1004: Generate, based on the geometric feature matrix and the location information of the to-be-synthesized virtual viewpoint, a plurality of to-be-processed virtual composite pixel matrices whose quantity is the same as that of the plurality of existing viewpoint images.

Specifically, the location information of the to-be-synthesized virtual viewpoint image (for example, coordinate values of two-dimensional coordinates or three-dimensional coordinates) is extended into a matrix with same rows and columns as the geometric feature matrix, the matrix is connected before or after the geometric feature matrix to form a hybrid information matrix, and then the hybrid information matrix is input into the generation network to obtain the plurality of to-be-processed viewpoint images. The generation network includes a plurality of adaptive convolution kernel generation models (the models may be convolutional neural network models) whose quantity is the same as that of the plurality of existing viewpoint images and a convolution calculation model. The hybrid information matrix is input into each of the plurality of adaptive convolution kernel generation models to generate an adaptive convolution kernel corresponding to each pixel in the pixel matrices of the plurality of existing viewpoint images. Then, a convolution calculation module performs convolution on the adaptive convolution kernel corresponding to each pixel and a pixel block (the pixel block is a pixel matrix and has a same size as a convolution kernel corresponding to the pixel block) with the pixel corresponding to the adaptive convolution kernel as a center, to obtain a virtual composite pixel corresponding to a pixel location of the pixel. Then, all virtual composite pixels corresponding to each image in the plurality of existing viewpoint images are composed into one virtual composite pixel matrix according to a pixel order of the image, to obtain the plurality of to-be-processed virtual composite pixel matrices. Each virtual composite pixel matrix represents one to-be-processed virtual viewpoint image.

Step 1005: Synthesize the virtual viewpoint image based on the plurality of to-be-processed virtual composite pixel matrices.

Specifically, the plurality of to-be-processed virtual composite pixel matrices are composed into a hybrid virtual composite pixel matrix, and then the hybrid virtual composite pixel matrix is input into the correction network to obtain the virtual viewpoint image. The correction network includes a correction convolutional neural network, and the neural network is used to synthesize the final virtual viewpoint image based on the input hybrid virtual composite pixel matrix and output the final virtual viewpoint image.

Step 1006: Calculate, by using a loss function, a loss value between the synthesized virtual viewpoint image and an image that is actually shot at a location of the to-be-synthesized virtual viewpoint image, and adaptively adjust parameters of convolutional neural network models in the representation network, the generation network, and the correction network based on the loss value.

Step 1007: Continually repeat operations of step 1001 to step 1006 until a loss value between a virtual viewpoint image finally output by the entire virtual viewpoint synthesis network and an actual image at a location corresponding to the virtual viewpoint image is less than a threshold, where that the loss value is less than the threshold indicates that the virtual viewpoint synthesis network has been successfully trained.

In some possible implementations, in an entire training process, step 1002, step 1003, and the obtaining a plurality of existing viewpoint images in step 1001 may be performed only once. Then, different location information (the location information is information about locations in an area defined by a polygon formed by the plurality of existing viewpoint images, or information about locations on a straight line between two existing viewpoint images; in addition, virtual viewpoint images generated at the locations are in an area formed by the plurality of existing viewpoint images, or in other words, content represented by the synthesized virtual viewpoint images is not beyond a range of content represented by the plurality of existing viewpoint images) is input to obtain the virtual viewpoint images at the different locations, the obtained virtual viewpoint images are compared with actual images at the corresponding locations, and then parameters of convolutional neural networks in the entire virtual viewpoint synthesis network are corrected slowly until the loss value between the finally output virtual viewpoint image and the actual image at the location corresponding to the virtual viewpoint image is less than the threshold.

The method 1000 may be specifically performed by the training device 720 shown in FIG. 7, and the plurality of existing viewpoint images, the location information of the to-be-synthesized virtual viewpoint image, and the image actually shot at the location corresponding to the virtual viewpoint image in the method 1000 may be the training data maintained in the database 730 shown in FIG. 7. Optionally, step 1001 and step 1002 in the method 1000 may be performed by the training device 720. Alternatively, step 1001 and step 1002 in the method 1000 may be performed by another functional module in advance before the training device 720 performs step 1003. To be specific, the another functional module first pre-processes the training data received or obtained from the database 730, for example, performs a process of step 1001 and step 1002 of obtaining a plurality of existing viewpoint images and location information of a to-be-synthesized virtual viewpoint image and obtaining a pixel matrix of each of the plurality of existing viewpoint images, to obtain a plurality of pixel matrices as an input to the training device 720; and the training device 720 performs step 1003 to step 1007.

Optionally, the method 1000 may be performed by a CPU, may be jointly performed by a CPU and a GPU, or may be jointly performed by a CPU and another processor suitable for neural network calculation. Selection of a specific processor is determined based on an actual case. This is not limited in this application.

**Embodiment 2**

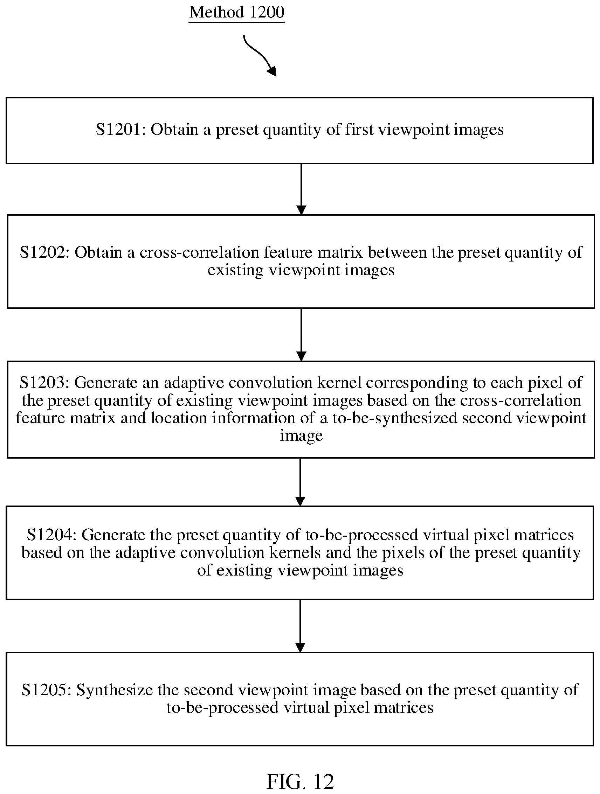

FIG. 12 shows a viewpoint image processing method 1200 according to an embodiment of the present invention. The method 1200 includes, but is not limited to, the following steps.

Step 1201: Obtain a preset quantity of first viewpoint images.

Specifically, the first viewpoint image is an existing viewpoint image.

In a specific embodiment, if synthesis of a virtual viewpoint image is completed on a server side (which includes a cloud server, and may be the server or the cloud side in the description of FIG. 7), the server may be networked with the preset quantity of video or image capture devices, and after capturing the preset quantity of images at the preset quantity of spatial locations, the preset quantity of capture devices send the preset quantity of images to the server. If synthesis of a virtual viewpoint image is completed at a terminal (which may be the terminal in the description of FIG. 7), after obtaining the preset quantity of existing viewpoint images from the preset quantity of capture devices, a server sends the preset quantity of images to the terminal. Specifically, there is an overlapping part between every two of the preset quantity of existing viewpoint images

Optionally, the preset quantity of existing viewpoint images may be existing viewpoint images whose quantity is any integer greater than or equal to 2.

Optionally, the preset quantity of existing viewpoint images are images captured by the preset quantity of video or image capture devices at a same moment.

Optionally, the preset quantity of spatial locations may be referred to as existing viewpoint locations, or in other words, locations of the capture devices in space during shooting of the existing viewpoint images are referred to as existing viewpoint locations. Each of the preset quantity of video or image capture devices is at one existing viewpoint location.

Optionally, the preset quantity of existing viewpoint locations may be on a same plane.

Optionally, the preset quantity of existing viewpoint locations may be arranged in a matrix form on a same plane. For example, if there are four existing viewpoint locations, the four existing viewpoint locations may be arranged in a form of a rectangle, and each existing viewpoint location is used as a vertex of the rectangle.

In one possible implementation, the preset quantity of obtained first viewpoint images may be determined and obtained based on location information that is of a to-be-synthesized virtual viewpoint image and that is sent by a terminal. Specifically, the terminal collects the location information of the to-be-synthesized virtual viewpoint image, and sends the location information to a server; and the server learns, through analysis-based on the location information, that the virtual viewpoint image can be synthesized based on the preset quantity of first viewpoint images. Therefore, the server sends shooting instructions to the corresponding preset quantity of capture devices; and the preset quantity of capture devices shoot corresponding images according to the instructions, and send the corresponding images to the server.

Optionally, the to-be-synthesized virtual viewpoint image may be an image that is virtually synthesized based on the preset quantity of existing viewpoint images through calculation.

Optionally, if the terminal is a VR display helmet, the location information of the virtual viewpoint image may be obtained by using a location sensor in the VR display helmet device. Specifically, when a user starts the VR helmet, the helmet automatically sets a coordinate origin and establishes a default coordinate system. The helmet may be moved up and down as the head of the user moves. Each time the helmet is moved to a location, the location sensor in the helmet obtains information (coordinate information) about the corresponding location as location information of a to-be-synthesized virtual viewpoint image.

Optionally, if the terminal is a computer or a touchscreen device, the location information of the to-be-synthesized virtual viewpoint image may be determined in response to a drag operation or a click operation on a mouse, a stylus, or the like, or the location information of the to-be-synthesized virtual viewpoint image may be determined in response to a movement direction of a mouse, a stylus, or the like.

Optionally, a location of the to-be-synthesized virtual viewpoint image may be information about any location in a closed range formed by the preset quantity of existing viewpoint image locations. For example, assuming that the preset quantity of existing viewpoint images are four viewpoint images and existing viewpoint locations corresponding to the four viewpoint images are successively connected through a line to form a polygon (for example, a rectangle), the location of the to-be-synthesized virtual viewpoint image may be a location in the polygon. In addition, the virtual viewpoint image generated at the location is in an area formed by the preset quantity of first viewpoint images, or in other words, content represented by the synthesized virtual viewpoint image is not beyond a range of content represented by the preset quantity of first viewpoint images.

Step 1202: Obtain a geometric feature matrix between the preset quantity of existing viewpoint images.

In a specific embodiment, the geometric feature matrix may be used to represent information about a geometric location relationship between the preset quantity of existing viewpoint images. Specifically, the geometric feature matrix may be used to represent information about a geometric location relationship between pixels of the preset quantity of existing viewpoint images.

Optionally, the information about the geometric location relationship may include information about a location offset relationship between pixels of any two of the preset quantity of existing viewpoint images, or may include a weight of a location offset (or a value of the location offset) between pixels of any two of the preset quantity of existing viewpoint images. For ease of understanding, an example is used for description: Assuming that there are two viewpoint images A and B, there is a pixel a in an overlapping part between the two images, and the viewpoint image A is used as a reference, a weight of a location offset of the pixel a in the viewpoint image B relative to the pixel a in the viewpoint image A is 5. This may indicate that a value of the location offset of the pixel a in the viewpoint image B relative to the pixel a in the viewpoint image A is five unit distances.

Optionally, the information about the geometric location relationship may include direction information of a location offset between pixels of any two of the preset quantity of existing viewpoint images. For ease of understanding, an example is used for description: Assuming that there are two viewpoint images A and B, there is a pixel a in an overlapping part between the two images, and the viewpoint image A is used as a reference, direction information of a location offset of the pixel a in the viewpoint image B relative to the pixel a in the viewpoint image A may include, for example, offsetting to the left, offsetting to the right, offsetting upward, offsetting downward, offsetting to the lower left, offsetting to the upper right, offsetting to the upper left, or offsetting to the lower right.

It should be noted that the foregoing two examples are merely used for description. Specific information about a geometric location relationship is determined based on a specific case. This is not limited in this solution.

The following describes three specific implementations of obtaining a geometric feature matrix between the preset quantity of existing viewpoint images.

Implementation 1:

The obtaining a geometric feature matrix between the preset quantity of existing viewpoint images includes: extracting a feature from each of the preset quantity of existing viewpoint images to obtain the preset quantity of feature matrices, where the feature includes one or more of a color feature, a texture feature, a shape feature, and a spatial relationship feature of each of the preset quantity of existing viewpoint images; performing a cross-correlation operation on every two of the preset quantity of feature matrices to obtain one or more feature matrices after the operation; and when one feature matrix after the operation is obtained, using the feature matrix after the operation as the geometric feature matrix; or when a plurality of feature matrices after the operation are obtained, obtaining the geometric feature matrix through calculation based on the plurality of feature matrices after the operation.

In a specific embodiment, the image features corresponding to the preset quantity of existing viewpoint images may be extracted by using a trained feature extraction model. Specifically, the preset quantity of existing viewpoint images are input into the feature extraction model to obtain feature matrices corresponding to the viewpoint images. Each of the preset quantity of feature matrices may include one or more of pixel information, a color feature, a texture feature, a shape feature, and a spatial relationship feature of a corresponding image. The feature matrices are obtained after performing a series of processing such as downsampling and convolution on original images by using the feature extraction model.

Then, a cross-correlation operation is performed on every two of the preset quantity of obtained feature matrices to obtain one or more feature matrices after the cross-correlation operation that have a same size. Specifically, when the preset quantity is 2, only one feature matrix after the cross-correlation operation is obtained after the cross-correlation operation is performed on the extracted feature matrices. In this case, the feature matrix after the cross-correlation operation is the geometric feature matrix. When the preset quantity is greater than 2, a plurality of feature matrices after the cross-correlation operation may be obtained after the cross-correlation operation is performed on the extracted feature matrices, and then the plurality of feature matrices after the cross-correlation operation are added up to obtain the geometric feature matrix.

Optionally, the feature extraction model may be a pre-trained convolutional neural network (Convolutional Neural Network, CNN) used to extract the features of the images.

Optionally, a feature matrix that is corresponding to each viewpoint image and that is obtained by using the feature extraction model may be a three-dimensional matrix. Assuming that a size of an input image is W\*H\*C, a size of an obtained feature matrix may be (W/4)\*(H/4)\*C0 (the size of the matrix obtained herein is merely given as an example; alternatively, the obtained matrix may be a matrix of another size, and this is not limited herein). C0 is a size of a third dimension, and may be referred to as a channel quantity. Each channel represents a feature of the image. For example, assuming that extracted features are pixel information, a color feature, a texture feature, a shape feature, and a spatial relationship feature of the image, a channel quantity C0 of an obtained pixel matrix of the image is 5. The five channels respectively represent the pixel information, the color feature, the texture feature, the shape feature, and the spatial relationship feature of the image. Certainly, the extracted features may alternatively be other image features, and the description is provided herein by merely using the example.

Optionally, the input image may refer to a pixel matrix representing the image. The pixel matrix is a three-dimensional pixel matrix, and may represent pixels of three color channels R, G, and B. In this case, C is 3. W and H are determined based on a size of an actual image, and this is not limited herein.

Optionally, if the input image is a grayscale image, the size of the input image may be W\*H. A pixel matrix representing the image may be a two-dimensional pixel matrix, and may represent pixels of the grayscale image.

It should be noted that, in the two cases in which the input image is a grayscale image and the input image is not a grayscale image, parameters of the feature extraction model may be different, and are specifically determined based on training results.

Optionally, sizes of the plurality of feature matrices after the cross-correlation operation may be (W/4)\*(H/4)\*C1, and C1=n\*n. During selection of n, a maximum offset between pixels in two images that are in the preset quantity of input images and whose shooting locations are farthest from each other needs to be considered.

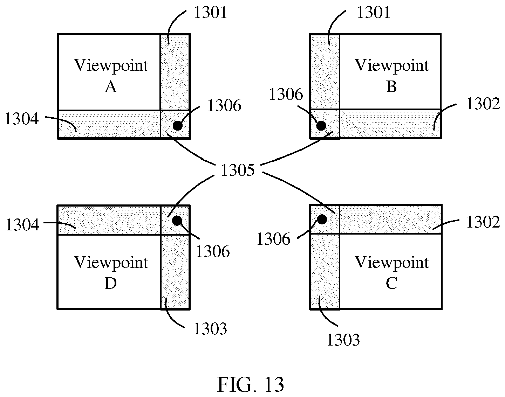

For example, referring to FIG. 13, it is assumed that the preset quantity of existing viewpoint images are four viewpoint images: a viewpoint image A, a viewpoint image B, a viewpoint image C, and a viewpoint image D. An area 1301 in the viewpoint image A and the viewpoint image B is an overlapping area between the two viewpoint images, an area 1302 in the viewpoint image B and the viewpoint image C is an overlapping area between the two viewpoint images, an area 1303 in the viewpoint image C and the viewpoint image D is an overlapping area between the two viewpoint images, an area 1304 in the viewpoint image D and the viewpoint image A is an overlapping area between the two viewpoint images, and an area 1305 in the four viewpoint images A, B, C, and D is an overlapping area among the four viewpoint images. Further, it is assumed that 1306 in the four viewpoint images A, B, C, and D represents a pixel, the pixel is at different locations in the four viewpoint images, but the pixel is one pixel that is in the images and that is corresponding to an actual object. The pixel is at different locations in the four viewpoint images because viewpoint image locations that are corresponding to the four viewpoint images and at which the images are captured are different (for example, the locations corresponding to the four viewpoint images are arranged in a rectangle).

In FIG. 13, it is assumed that a subscript of the pixel 1306 in a pixel matrix corresponding to the viewpoint image A is [a1][a2], a subscript of the pixel 1306 in a pixel matrix corresponding to the viewpoint image B is [b1][b2], a subscript of the pixel 1306 in a pixel matrix corresponding to the viewpoint image C is [c1][c2], and a subscript of the pixel 1306 in a pixel matrix corresponding to the viewpoint image D is [d1][d2]. In addition, assuming that the viewpoint image A is a reference viewpoint image, the pixel 1306 that is in the other three viewpoint images and whose offset relative to the pixel 1306 in the viewpoint image A is largest is the pixel 1306 in the viewpoint image D. Therefore, an offset between the pixel 1306 in the viewpoint image A and the pixel 1306 in the viewpoint image D is calculated, or in other words, $n_{AD} = \sqrt{(a1-d1)^2 + (a2-d2)^2}$ is obtained. Certainly, the viewpoint image B may alternatively be used as a reference viewpoint image, and the pixel 1306 that is in the other three viewpoint images and whose offset relative to the pixel 1306 in the viewpoint image B is largest is the pixel 1306 in the viewpoint image C. Therefore, an offset between the pixel 1306 in the viewpoint image B and the pixel 1306 in the viewpoint image C is calculated, or in other words, $n_{BC} = \sqrt{(b1-c1)^2 + (b2-c2)^2}$ is obtained. Therefore, $n \geq \max(n_{AD}, n_{BC})$. In addition, n is an integer.

Optionally, because the sizes of the plurality of feature matrices after the cross-correlation operation may be (W/4)\*(H/4)\*C1, a size of the geometric feature matrix obtained by adding up the plurality of feature matrices after the cross-correlation operation is also (W/4)\*(H/4)\*C1.

Optionally, for ease of understanding of the process of performing a cross-correlation operation on every two of the feature matrices, the following provides a description by using an example. It is assumed that two matrices on which a cross-correlation operation is performed are a matrix A and a matrix B. A subscript [i][j][k] in the two matrices represents a subscript of an element in an $i^{th}$ row, a $j^{th}$ column, and a $k^{th}$ channel. It is assumed that sizes of the matrix A and the matrix B are m1*m2*m3. This indicates that the two matrices each have m1 rows, m2 columns, and m3 channels. In addition, it is assumed that the offset n is 3. In this case, m3 elements whose subscripts are [i][j][1], [i][j][2], [i][j][3], ..., and [i][j][m3] are selected from the matrix A to form a first vector. 3*3*m3 elements with the following subscripts are selected from the matrix B to form a first matrix: [i-1][j-1][1], [i-1][j-1][2], [i-1][j-1][3], ..., and [i-1][j-1][m3]; [i-1][j][1], [i-1][j][2], [i-1][j][3], ..., and [i-1][j][m3]; [i-1][j+1][1], [i-1][j+1][2], [i-1][j+1][3], ..., and [i-1][j+1][m3]; [i][j-1][1], [i][j-1][2], [i][j-1][3],..., and [i][j-1][m3]; [i][j][1], [i][j][2], [i][j][3], ..., and [i][j][m3]; [i][j+1][1], [i][j+1][2], [i][j+1][3], ..., and [i][j+1][m3]; [i+1][i-1][1], [i+1][j-1][2], [i+1][j-1][3], ..., and [i+1][j-1][m3]; [i+1][j][1], [i+1][j][2], [i+1][j][3], ..., and [i+1][j][m3]; and [i+1][j+1][1], [i+1][j+1][2], [i+1][j+1][3], ..., and [i+1][j+1][m3]. In other words, the first matrix is a matrix whose size is 3*3*m3 and that uses an element whose subscript is [i][j][(1+m3)/2] a center. Then, a cross-correlation operation is performed on the first vector and the first matrix to obtain a vector including 3*3 elements, where i is greater than or equal to 1 and less than or equal to m1, and j is greater than or equal to 1 and less than or equal to m2. Through calculation, m1*m2 vectors whose sizes are 3*3 are finally obtained. Then, the m1*m2 vectors are composed, according to an order corresponding to original elements of the matrix A, into a feature matrix whose size is m1*m2*9 and that is obtained after the cross-correlation operation.

It should be noted that, when an element whose subscript is [i][j][1] is an element at an edge of the matrix, when the first matrix including 3*3*m3 elements cannot be obtained from the matrix B, an element that cannot be obtained may be supplemented by 0, or may be supplemented by an element corresponding to an outermost edge of the matrix B, so that these elements can be composed into the first matrix including 3*3*m3 elements.

Certainly, the process of performing a cross-correlation operation is described herein by merely using the example. The foregoing parameters may be determined according to a specific case. This is not limited in this solution.

Implementation 2:

The obtaining a geometric feature matrix between the preset quantity of existing viewpoint images includes: extracting a pixel from each of the preset quantity of existing viewpoint images to obtain at least two pixel matrices; composing the obtained at least two pixel matrices into a hybrid pixel matrix; and inputting the hybrid pixel matrix into a first preset convolutional neural network model to obtain the geometric feature matrix.

In a specific embodiment, the first convolutional neural network model is a trained machine learning model for obtaining the geometric characteristic matrix through calculation based on the hybrid pixel matrix.

Specifically, in this embodiment of this application, if the preset quantity of existing viewpoint images are color images, a pixel matrix corresponding to three color channels R, G, and B of each of the preset quantity of viewpoint images may be obtained first by using a pixel reading function or program, and then the preset quantity of obtained pixel matrices are composed into a three-dimensional hybrid pixel matrix according to an order.

Optionally, the composing the preset quantity of obtained pixel matrices into a three-dimensional hybrid pixel matrix according to an order includes: connecting the preset quantity of obtained pixel matrices in a head-to-tail manner to form a three-dimensional hybrid pixel matrix whose channel quantity is three times the preset quantity. For ease of understanding, an example is used below for description.

For example, if there are four viewpoint images A, B, C, and D, and one three-dimensional pixel matrix including pixels of three channels R, G, and B (a first channel, a second channel, and a third channel in the three-dimensional matrix respectively represent pixel values of the channels R, G, and B) may be obtained for each viewpoint image, four three-dimensional pixel matrices may be obtained. It is assumed that the four three-dimensional pixel matrices are a matrix 1, a matrix 2, a matrix 3, and a matrix 4. In this case, according to an order of the matrix 1, the matrix 2, the matrix 3, and the matrix 4, the matrix 2 may be added after a third channel of the matrix 1 to obtain a matrix with six channels, the matrix 3 may be added after a third channel of the matrix 2 to obtain a matrix with nine channels, and then the matrix 4 may be added after a third channel of the matrix 3 to obtain a matrix with 12 channels. The matrix with 12 channels is a finally obtained three-dimensional hybrid pixel matrix. Alternatively, the four three-dimensional pixel matrices may be composed into the hybrid pixel matrix according to an order of the matrix 1, the matrix 3, the matrix 2, and the matrix 4, or may be composed into the hybrid pixel matrix according to an order of the matrix 2, the matrix 1, the matrix 3, and the matrix 4; or the like. A specific order of the four three-dimensional pixel matrices may be determined according to an actual case, and this is not limited in this solution.

It should be noted that, for the hybrid pixel matrices obtained according to the foregoing different orders, structures and parameters of the corresponding first convolutional neural network model may be different.

Specifically, in this embodiment of this application, if the preset quantity of existing viewpoint images are grayscale images, a grayscale value matrix of each of the preset quantity of viewpoint images may be obtained first by using a grayscale value reading function or program. The grayscale value matrix is a pixel matrix with one channel. Then, the preset quantity of obtained grayscale value matrices are composed into a three-dimensional hybrid pixel matrix according to an order.

Optionally, the composing the preset quantity of obtained grayscale value matrices into a three-dimensional hybrid pixel matrix according to an order includes: connecting the preset quantity of obtained grayscale value matrices in a head-to-tail manner to form a three-dimensional hybrid pixel matrix whose channel quantity is the preset quantity. For ease of understanding, an example is used below for description.

For example, if there are four viewpoint images A, B, C, and D, and one grayscale value matrix may be obtained for each viewpoint image, four grayscale value matrices may be obtained. It is assumed that the four grayscale matrices are a matrix 11, a matrix 21, a matrix 31, and a matrix 41. In this case, according to an order of the matrix 11, the matrix 21, the matrix 31, and the matrix 41, the matrix 21 may be added after the matrix 11 to obtain a matrix with two channels, the matrix 31 may be added after the matrix 21 to obtain a matrix with three channels, and then the matrix 41 is added after the matrix 31 to obtain a matrix with four channels. The matrix with four channels is a finally obtained three-dimensional hybrid pixel matrix. Alternatively, the four grayscale matrices may be composed into the hybrid pixel matrix according to an order of the matrix 11, the matrix 31, the matrix 21, and the matrix 41, or may be composed into the hybrid pixel matrix according to an order of the matrix 21, the matrix 11, the matrix 31, and the matrix 41; or the like. A specific order of the four grayscale matrices may be determined according to an actual case, and this is not limited in this solution.

It should be noted that, for the hybrid pixel matrices obtained according to the foregoing different orders, structures and parameters of the corresponding first convolutional neural network model may be different.

Implementation 3:

The obtaining a geometric feature matrix between the preset quantity of existing viewpoint images includes: extracting a feature from each of the preset quantity of existing viewpoint images to obtain the preset quantity of feature matrices, where the feature includes one or more of a color feature, a texture feature, a shape feature, and a spatial relationship feature of each of the preset quantity of existing viewpoint images; composing the preset quantity of feature matrices into a hybrid feature matrix; and inputting the hybrid feature matrix into a preset convolutional neural network model to obtain the geometric feature matrix.

In this embodiment of this application, the feature matrix is used to replace the pixel matrix in Implementation 2. For a specific implementation thereof, refer to the specific descriptions in Implementation 2. Details are not described herein again.

It should be noted that, a structure and a parameter of the preset convolutional neural network model in Implementation 3 may be different from those of the first preset convolutional neural network model in Implementation 2, and a specific structure and parameter thereof are determined based an actual training status.

Step 1203: Generate an adaptive convolution kernel corresponding to each pixel of the preset quantity of existing viewpoint images based on the geometric feature matrix and location information of a to-be-synthesized second viewpoint image.

Specifically, the to-be-synthesized second viewpoint image is a to-be-synthesized virtual viewpoint image.

In a specific embodiment, if synthesis of a virtual viewpoint image is completed on a server side, the location information of the to-be-synthesized virtual viewpoint image may be collected by a terminal and then sent to the server by the terminal. If synthesis of a virtual viewpoint image is completed at a terminal, the location information of the to-be-synthesized virtual viewpoint image may be directly collected by the terminal, and then used for synthesis of the virtual viewpoint image.

For a specific description of the location information of the to-be-synthesized virtual viewpoint image, refer to the corresponding description of step 1201. Details are not described herein again.

In a specific embodiment, after the geometric feature matrix and the location information of the to-be-synthesized virtual viewpoint image are obtained, the two pieces of information are input into a pre-trained convolutional neural network to obtain the adaptive convolution kernel corresponding to each pixel of the preset quantity of existing viewpoint images.

Optionally, the obtained adaptive convolution kernel corresponding to each pixel may be a matrix whose size is n*n, and n may be the maximum offset n in FIG. 13.

The following describes a specific implementation of the generating an adaptive convolution kernel corresponding to each pixel of the preset quantity of existing viewpoint images based on the geometric feature matrix and location information of a to-be-synthesized second viewpoint image.

The location information of the to-be-synthesized virtual viewpoint image is two-dimensional coordinates or three-dimensional coordinates, and the determining an adaptive convolution kernel corresponding to each pixel of the preset quantity of existing viewpoint images based on the geometric feature matrix and location information of a to-be-synthesized virtual viewpoint image includes: extending the location information of the to-be-synthesized virtual viewpoint image into a location matrix whose quantities of rows and columns are the same as those of the geometric feature matrix; composing the location matrix and the geometric feature matrix into a hybrid information matrix; inputting the hybrid information matrix into each of the preset quantity of second preset convolutional neural network models, where the preset quantity of second preset convolutional neural network models have a same structure and different parameters; and obtaining the adaptive convolution kernel corresponding to each pixel of the preset quantity of existing viewpoint images based on output results of the preset quantity of second preset convolution neural network models.

For ease of understanding of this embodiment of this application, an example is used below for description.

Assuming that a size of the geometric feature matrix is (W/4)*(H/4)*C1, and coordinates of a location of the to-be-synthesized virtual viewpoint image are (x0, y0), the coordinates are extended into a three-dimensional matrix based on the coordinate values. To be specific, x0 is extended into (W/4)*(H/4) x0, and (W/4)*(H/4) x0 are on a same dimension plane; y0 is extended into (W/4)*(H/4) y0, and (W/4)*(H/4) y0 are on a same dimension plane; and x0 and y0 of the two dimensions may be combined together to form a location matrix whose size is (W/4)*(H/4)*2. Then, the location matrix is added to the geometric feature matrix to form a three-dimensional hybrid information matrix whose size is (W/4)*(H/4)*(C1+2).

Optionally, the location information of the to-be-synthesized virtual viewpoint image may be three-dimensional coordinates. For example, the location information of the to-be-synthesized virtual viewpoint image may be (x0, y0, z0). Assuming that a size of the geometric feature matrix is (W/4)*(H/4)*C1, the coordinates are extended into a three-dimensional matrix based on the coordinate values. To be specific, x0 is extended into (W/4)*(H/4) x0, and (W/4)*(H/4) x0 are on a same channel plane; y0 is extended into (W/4)*(H/4) y0, and (W/4)*(H/4) y0 are on a same channel plane; z0 is extended into (W/4)*(H/4) z0, and (W/4)*(H/4) z0 are on a same channel plane; and x0, y0, and z0 of the three channels are combined together to form a location matrix whose size is (W/4)*(H/4)*3. Then, the location matrix is added to the geometric feature matrix to form a three-dimensional hybrid information matrix whose size is (W/4)*(H/4)*(C1+3).

Optionally, the location matrix may be added to any location of the geometric feature matrix. For example, the location matrix may be added before, behind, or in the middle of the geometric feature matrix. However, considering a meaning of convolution processing, the location matrix is usually added before or behind the geometric feature matrix. It should be noted that, parameters of the second preset convolutional neural network model when the location matrix is added before and behind the geometric feature matrix are different, and specific parameters thereof are determined based on training results.

Assuming that the preset quantity of existing viewpoint images are four viewpoint images A, B, C, and D, the preset quantity of second preset convolutional neural network models are four second preset convolutional neural network models. The four second preset convolutional neural network models are a model A, a model B, a model C, and a model D. The model A is pre-trained and is used to obtain, based on the hybrid information matrix through calculation, an adaptive convolution kernel corresponding to each pixel of the viewpoint image A, the model B is pre-trained and is used to obtain, based on the hybrid information matrix through calculation, an adaptive convolution kernel corresponding to each pixel of the viewpoint image B, the model C is pre-trained and is used to obtain, based on the hybrid information matrix through calculation, an adaptive convolution kernel corresponding to each pixel of the viewpoint image C, and the model D is pre-trained and is used to obtain, based on the hybrid information matrix through calculation, an adaptive convolution kernel corresponding to each pixel of the viewpoint image D. Therefore, after the hybrid information matrix is obtained, the hybrid information matrix is input into each of the model A, the model B, the model C, and the model D, and the adaptive convolution kernel corresponding to each pixel of the viewpoint image A, the adaptive convolution kernel corresponding to each pixel of the viewpoint image B, the adaptive convolution kernel corresponding to each pixel of the viewpoint image C, and the adaptive convolution kernel corresponding to each pixel of the viewpoint image D are respectively output from the four models correspondingly.

Optionally, the model A, the model B, the model C, and the model D have a same convolutional neural network structure but have different parameters. Specific parameters thereof are determined based on training results.

Step 1204: Generate the preset quantity of to-be-processed virtual composite pixel matrices based on the adaptive convolution kernels and the pixels of the preset quantity of existing viewpoint images.

Specifically, assuming that there are four existing viewpoint images A, B, C, and D, convolution is performed on an adaptive convolution kernel corresponding to each viewpoint image and pixels of the viewpoint image, to obtain a to-be-processed virtual composite pixel matrix. To be specific, convolution is performed on an adaptive convolution kernel corresponding to the viewpoint image A and pixels of the viewpoint image A, to obtain a to-be-processed virtual composite pixel matrix A; convolution is performed on an adaptive convolution kernel corresponding to the viewpoint image B and pixels of the viewpoint image B, to obtain a to-be-processed virtual composite pixel matrix B; convolution is performed on an adaptive convolution kernel corresponding to the viewpoint image C and pixels of the viewpoint image C, to obtain a to-be-processed virtual composite pixel matrix C; and convolution is performed on an adaptive convolution kernel corresponding to the viewpoint image D and pixels of the viewpoint image D, to obtain a to-be-processed virtual composite pixel matrix D.

The following describes a specific implementation of the generating the preset quantity of to-be-processed virtual composite pixel matrices based on the adaptive convolution kernels and the pixels of the preset quantity of existing viewpoint images.

The generating the preset quantity of to-be-processed virtual composite pixel matrices based on the adaptive convolution kernel corresponding to each pixel of the preset quantity of existing viewpoint images and the pixels of the preset quantity of existing viewpoint images includes: performing convolution on the adaptive convolution kernel corresponding to each pixel of the preset quantity of existing viewpoint images and a pixel matrix with the pixel as a center in a one-to-one correspondence to obtain a virtual composite pixel corresponding to a pixel location of the pixel, where a quantity of rows of the pixel matrix is the same as that of the adaptive convolution kernel corresponding to the pixel, and a quantity of columns of the pixel matrix is the same as that of the adaptive convolution kernel corresponding to the pixel; and composing the virtual composite pixels corresponding to all the pixels into the preset quantity of virtual composite pixel matrices.

For ease of understanding of this embodiment of this application, an example is used below for description.

It is assumed that the preset quantity of existing viewpoint images are four viewpoint images A, B, C, and D, and that sizes of pixel matrices of the four viewpoint images are all W*H*3, or in other words, there are W*H*3 pixels in a pixel matrix of each viewpoint image. Each of the W*H*3 pixels corresponds to one adaptive convolution kernel. Herein, 3 indicates that the pixel matrix has three channels, and the three channels are three color channels: R, G, and B.

In this embodiment of this application, convolution is performed on an adaptive convolution kernel corresponding to each pixel in the pixel matrices of the four viewpoint images and a pixel matrix that uses the pixel as a center and whose size is the same as that of the adaptive convolution kernel corresponding to the pixel, to obtain a virtual composite pixel corresponding to a location of each pixel in the pixel matrices of the four viewpoint images. Virtual composite pixels corresponding to locations of all pixels of each viewpoint image may be composed into one virtual composite pixel matrix. In this case, four virtual composite pixel matrices may be formed based on the four viewpoint images. The sizes of the four virtual composite pixel matrices are the same as those of the existing viewpoint images, or in other words, the sizes of the four virtual composite pixel matrices are W*H*3. Each virtual composite pixel matrix represents one to-be-processed virtual viewpoint image. In this case, the four virtual composite pixel matrices represent four to-be-processed virtual viewpoint images. The to-be-processed virtual viewpoint images are preliminarily obtained virtual viewpoint images, and need to be further processed to obtain a final virtual viewpoint image that needs to be synthesized.

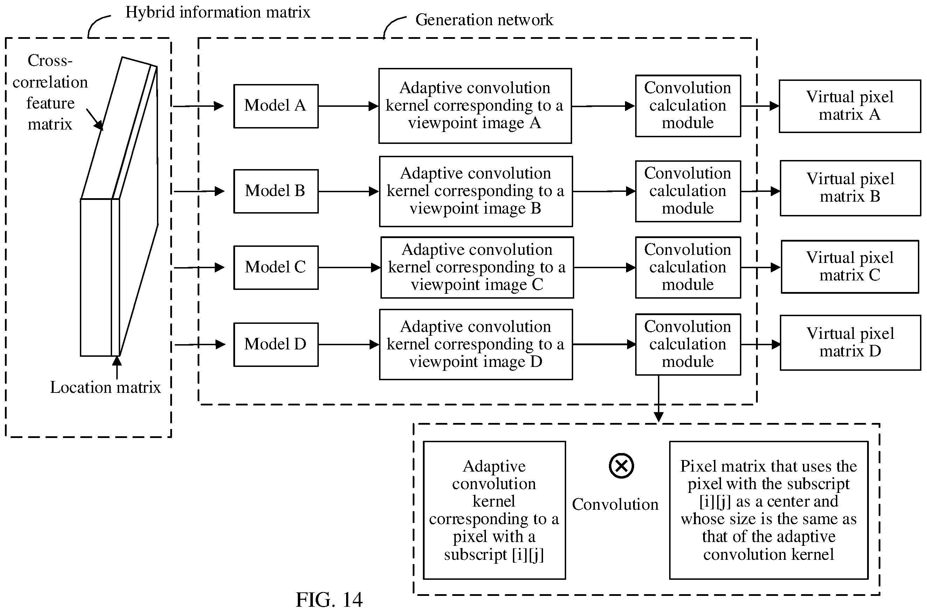

For ease of understanding of step 1203 and step 1204, refer to FIG. 14. In FIG. 14, the hybrid information matrix into which the geometric feature matrix and the location matrix are composed is input into a generation network. The hybrid information matrix is first input into each of a model A, a model B, a model C, and a model D, an adaptive convolution kernel corresponding to each pixel of a viewpoint image A, an adaptive convolution kernel corresponding to each pixel of a viewpoint image B, an adaptive convolution kernel corresponding to each pixel of a viewpoint image C, and an adaptive convolution kernel corresponding to each pixel of a viewpoint image D are respectively output from the four models. Then, convolution is performed on an obtained adaptive convolution kernel and a corresponding pixel matrix by using a convolution calculation module of the generation network. The corresponding pixel matrix is a pixel block that uses a pixel corresponding to the convolution kernel as a center and whose size is the same as that of the convolution kernel. One virtual composite pixel is obtained after convolution is performed on each convolution kernel, and finally virtual composite pixel matrices A, B, C and D in a one-to-one correspondence with the viewpoint images A, B, C and D are obtained. The virtual composite pixel matrices A, B, C, and D are the to-be-processed virtual composite pixel matrices.

Step 1205: Synthesize the second viewpoint image based on the preset quantity of to-be-processed virtual composite pixel matrices.

In a specific embodiment, a convolutional neural network model is pre-trained to synthesize the second viewpoint image based on the preset quantity of to-be-processed virtual composite pixel matrices. Specifically, the preset quantity of to-be-processed virtual composite pixel matrices are first composed into a hybrid virtual composite pixel matrix, and then the hybrid virtual composite pixel matrix is input into the trained model to obtain the final virtual viewpoint image corresponding to the location information of the to-be-synthesized virtual viewpoint image.

Optionally, in this embodiment of this application, assuming that the preset quantity is 4, the four obtained to-be-processed virtual composite pixel matrices may be composed into a composite matrix whose size is W*H*12, and then the composite matrix is input into the trained model to output the virtual viewpoint image corresponding to the location information of the to-be-synthesized virtual viewpoint image.

Optionally, assuming that the four virtual composite pixel matrices are a matrix A, a matrix B, a matrix C, and a matrix D, during composing of the four virtual composite pixel matrices into a composite matrix whose size is W*H*12, the four virtual composite pixel matrices may be composed into the composite matrix whose size is W*H*12 according to an order of the matrix A, the matrix B, the matrix C, and the matrix D, where each matrix is arranged according to an order of channels R, G, and B. Alternatively, the four virtual composite pixel matrices may be composed into the composite matrix whose size is W*H*12 according to an order of the matrix B, the matrix A, the matrix C, and the matrix D, where each matrix is arranged according to an order of channels R, G, and B. Alternatively, the four virtual composite pixel matrices may be composed into the composite matrix whose size is W*H*12 according to an order of the matrix A, the matrix B, the matrix C, and the matrix D, where each matrix is arranged according to an order of channels G, R, and B; or the like. An order in which the four virtual composite pixel matrices are composed into the composite matrix is described herein by merely using the examples. Another order may alternatively be used, and any order in which the four virtual composite pixel matrices can be composed into the composite matrix whose size is W*H*12 falls within a protection range.

In conclusion, an entire system is an end-to-end deep neural network, and all operations (convolution, cross-correlation, adaptive convolution, and the like) in the network are differentiable. Therefore, an optimization algorithm based on gradient descent, such as an Adam algorithm, may be used for optimization. An objective function used during training is a cost function, such as MAE, that can be used to measure a pixel error. For a group of existing viewpoint images, a representation network in the present invention needs to be run only once, and then a virtual viewpoint image may be generated based on a cross cost volume generated by the representation network and a location of the virtual viewpoint image that needs to be synthesized.

Optionally, the method in FIG. 12 may be performed by a CPU, may be jointly performed by a CPU and a GPU, or may be jointly performed by a CPU and another processor suitable for neural network calculation. Selection of a specific processor is determined based on an actual case. This is not limited in this application.

Embodiment 1 can be understood as a training stage of the virtual viewpoint synthesis network (a stage performed by the training device 720 shown in FIG. 7), and specific training is performed by using the virtual viewpoint synthesis network provided in Embodiment 1 and any possible implementation based on Embodiment 1. Embodiment 2 can be understood as an application stage of the virtual viewpoint synthesis network (a stage performed by the execution device 710 shown in FIG. 7). A specific case may be as follows: Based on existing viewpoint images and location information of a to-be-synthesized virtual viewpoint that are input by a user, an output virtual viewpoint image, that is, the second viewpoint image in Embodiment 2, is obtained by using the virtual viewpoint synthesis network obtained through training in Embodiment 1.

In the foregoing, the viewpoint image processing method provided in the embodiments of this application is described mainly from a perspective of a viewpoint image processing device (that is, a server or a terminal that performs the method described in FIG. 12). It may be understood that to implement the foregoing functions, the viewpoint image processing device includes corresponding hardware structures and/or software modules for performing the functions. A person of ordinary skill in the art should easily be aware that, in combination with the examples described in the embodiments disclosed in this specification, devices and method steps may be implemented by hardware or a combination of hardware and computer software in this application. Whether a function is performed by hardware or hardware driven by computer software depends on particular applications and design constraints of the technical solutions. A person skilled in the art may use different methods to implement the described functions of each particular application, but it should not be considered that the implementation goes beyond the scope of this application.

In the embodiments of this application, the viewpoint image processing device may be divided into functional modules based on the foregoing method examples. For example, functional modules may be obtained through division based on corresponding functions, or two or more functions may be integrated into one processing module. The integrated module may be implemented in a form of hardware, or may be implemented in a form of a software functional module. It should be noted that division into the modules in the embodiments of this application is an example, and is merely a logical function division. During actual implementation, another division manner may be used.

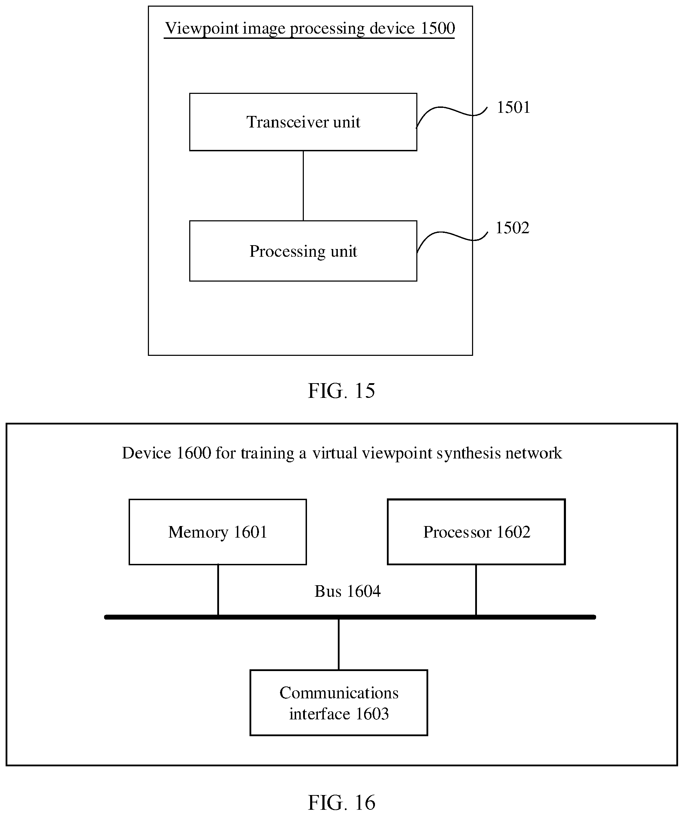

When the functional modules are obtained through division in correspondence to the functions, FIG. 15 is a schematic diagram of a possible logical structure of the viewpoint image processing device in the foregoing embodiments. The viewpoint image processing device 1500 includes a transceiver unit 1501 and a processing unit 1502. For example, the transceiver unit 1501 is configured to support the viewpoint image processing device 1500 in performing the step of receiving information by the viewpoint image processing device 1500 in the foregoing method embodiment shown in FIG. 5. The transceiver unit 1501 is further configured to support the viewpoint image processing device 1500 in performing the step of sending information by the viewpoint image processing device 1500 in the foregoing method embodiment shown in FIG. 5. The processing unit 1502 is configured to support the viewpoint image processing device 1500 in performing the step of generating information by the viewpoint image processing device 1500 in the foregoing method embodiment shown in FIG. 5, and implementing a function other than the functions of the transceiver unit 1501, and the like.

Optionally, the viewpoint image processing device 1500 may further include a storage unit, configured to store a computer program or data. In a possible manner, the processing unit 1502 may invoke the computer program or data in the storage unit, so that the viewpoint image processing device 1500 obtains at least two first viewpoint images, where the at least two first viewpoint images include images respectively captured at at least two viewpoint locations; obtains a geometric feature matrix between the at least two first viewpoint images, where the geometric feature matrix is a matrix used to represent information about a geometric location relationship between pixels of the at least two first viewpoint images; generates an adaptive convolution kernel corresponding to each pixel of the at least two first viewpoint images based on the geometric feature matrix and location information of a to-be-synthesized second viewpoint image, where the location information represents a viewpoint location of the second viewpoint image, the second viewpoint image is in a target area, and the target area includes an area formed by the at least two first viewpoint images; generates at least two to-be-processed virtual composite pixel matrices based on the adaptive convolution kernels and the pixels of the at least two first viewpoint images; and synthesizes the second viewpoint image by using the at least two to-be-processed virtual composite pixel matrices.

FIG. 16 is a schematic diagram of a structure of hardware of a device for training a virtual viewpoint synthesis network according to an embodiment of this application. The device 1600 for training a virtual viewpoint synthesis network shown in FIG. 16 (the device 1600 may be specifically a computer device) includes a memory 1601, a processor 1602, a communications interface 1603, and a bus 1604. Communication connections between the memory 1601, the processor 1602, and the communications interface 1603 are implemented through the bus 1604.

The memory 1601 may be a read-only memory (Read-Only Memory, ROM), a static storage device, a dynamic storage device, or a random access memory (Random Access Memory, RAM). The memory 1601 may store a program. When the program stored in the memory 1601 is executed by the processor 1602, the processor 1602 and the communications interface 1603 are configured to perform the steps of the method for training a virtual viewpoint synthesis network in the embodiments of this application.

The processor 1602 may be a general-purpose central processing unit (Central Processing Unit, CPU), a microprocessor, an application-specific integrated circuit (Application-Specific Integrated Circuit, ASIC), a graphics processing unit (graphics processing unit, GPU), or one or more integrated circuits, and is configured to execute a related program, to implement the functions that need to be performed by the units in the device for training the virtual viewpoint synthesis network in this embodiment of this application, or perform the method for training the virtual viewpoint synthesis network in the method embodiment of this application.

The processor 1602 may alternatively be an integrated circuit chip and has a signal processing capability. In an implementation process, the steps of the method for training the virtual viewpoint synthesis network in this application may be completed by using a hardware integrated logic circuit in the processor 1602 or instructions in a form of software. The processor 1602 may alternatively be a general-purpose processor, a digital signal processor (Digital Signal Processing, DSP), an application-specific integrated circuit (ASIC), a field programmable gate array (Field Programmable Gate Array, FPGA) or another programmable logic device, a discrete gate or transistor logic device, or a discrete hardware component. The methods, the steps, and logic block diagrams that are disclosed in the embodiments of this application may be implemented or performed. The general-purpose processor may be a microprocessor, or the processor may be any conventional processor or the like. Steps of the methods disclosed with reference to the embodiments of this application may be directly executed and accomplished by using a hardware decoding processor, or may be executed and accomplished by using a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in the memory 1601. The processor 1602 reads information in the memory 1601, and implements, by using hardware of the processor 1602, a function that needs to be implemented by a unit included in the device for training a virtual viewpoint synthesis network in the embodiments of this application, or performs the method for training a virtual viewpoint synthesis network in the method embodiment of this application.

The communications interface 1603 uses a transceiver apparatus, for example, but not limited to, a transceiver, to implement communication between the device 1600 and another device or a communications network. For example, training data (for example, the existing viewpoint images described in Embodiment 1 of this application) may be obtained through the communications interface 1603.

The bus 1604 may include a path for information transfer between various components (for example, the memory 1601, the processor 1602, and the communications interface 1603) of the device 1600.

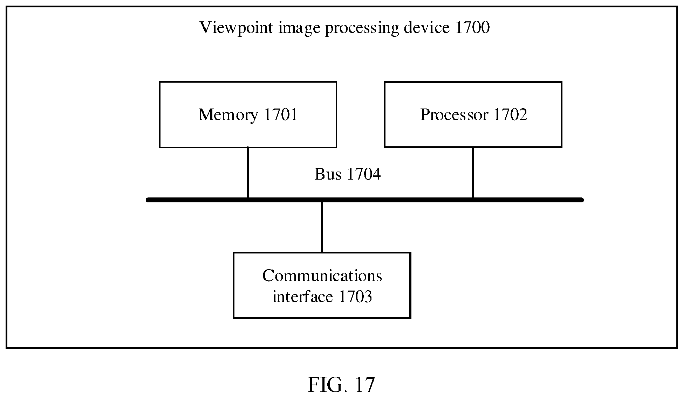

FIG. 17 is a schematic diagram of a hardware structure of a viewpoint image processing device according to an embodiment of this application. The viewpoint image processing device 1700 shown in FIG. 17 (the device 1700 may specifically be a computer device) includes a memory 1701, a processor 1702, a communications interface 1703, and a bus 1704. Communication connections between the memory 1701, the processor 1702, and the communications interface 1703 are implemented through the bus 1704.

The memory 1701 may be a read-only memory (Read-Only Memory, ROM), a static storage device, a dynamic storage device, or a random access memory (Random Access Memory, RAM). The memory 1701 may store a program. When the program stored in the memory 1701 is executed by the processor 1702, the processor 1702 and the communications interface 1703 are configured to perform the steps of the viewpoint image processing method in the embodiments of this application.

The processor 1702 may be a general-purpose central processing unit (Central Processing Unit, CPU), a microprocessor, an application-specific integrated circuit (Application-Specific Integrated Circuit, ASIC), a graphics processing unit (graphics processing unit, GPU), or one or more integrated circuits. The processor is configured to execute a related program, to implement functions that need to be implemented by the units in the viewpoint image processing device in the embodiments of this application, or perform the viewpoint image processing method in the method embodiment of this application.

The processor 1702 may alternatively be an integrated circuit chip and has a signal processing capability. In an implementation process, the steps of the viewpoint image processing method in this application may be completed by using a hardware integrated logic circuit in the processor 1702 or instructions in a form of software. The processor 1702 may alternatively be a general-purpose processor, a digital signal processor (Digital Signal Processing, DSP), an application-specific integrated circuit (ASIC), a field programmable gate array (Field Programmable Gate Array, FPGA) or another programmable logic device, a discrete gate or transistor logic device, or a discrete hardware component. The methods, the steps, and logic block diagrams that are disclosed in the embodiments of this application may be implemented or performed. The general-purpose processor may be a microprocessor, or the processor may be any conventional processor or the like. Steps of the methods disclosed with reference to the embodiments of this application may be directly executed and accomplished by using a hardware decoding processor, or may be executed and accomplished by using a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in the memory 1701. The processor 1702 reads information in the memory 1701, and completes, in combination with hardware of the processor 1702, functions that need to be performed by the units included in the viewpoint image processing device in this embodiment of this application, or performs the viewpoint image processing method in the method embodiments of this application.

The communications interface 1703 uses a transceiver apparatus, for example, but not limited to, a transceiver, to implement communication between the device 1700 and another device or a communications network. For example, training data (for example, the X image in Embodiment 2 of this application) may be obtained by using the communications interface 1703.

The bus 1704 may include a path for information transfer between various components (for example, the memory 1701, the processor 1702, and the communications interface 1703) of the device 1700.

It should be understood that, the transceiver unit 1501 in the viewpoint image processing device 1500 is equivalent to the communications interface 1703 in the viewpoint image processing device 1700, and the processing unit 1502 in the viewpoint image processing device 1500 may be equivalent to the processor 1702. In addition, a virtual device is combined with a physical device herein.

It should be noted that although only the memory, the processor, and the communications interface of each of the devices 1600 and 1700 shown in FIG. 16 and FIG. 17 are illustrated, in a specific implementation process, a person skilled in the art should understand that the devices 1600 and 1700 each further include other components necessary for normal running. In addition, based on a specific requirement, a person skilled in the art should understand that the devices 1600 and 1700 each may further include hardware components for implementing other additional functions. In addition, a person skilled in the art should understand that the devices 1600 and 1700 each may include only components necessary for implementing the embodiments of this application, but not necessarily include all the components shown in FIG. 16 or FIG. 17.

It can be understood that the device 1600 is equivalent to the training device 720 in FIG. 7, and the device 1700 is equivalent to the execution device 710 in FIG. 7. A person of ordinary skill in the art may be aware that units and algorithm steps in the examples described with reference to the embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

In conclusion, based on the problems in the conventional technology that are described in FIG. 1, FIG. 2, and FIG. 3, in the present invention, the features of the plurality of existing viewpoint images are represented as one complete geometric feature matrix by using a spatial relationship between the plurality of existing viewpoint images. This implements representation of the information about the geometric location relationship between the plurality of existing viewpoint images. On this basis, in the present invention, the adaptive convolution kernel corresponding to the target virtual viewpoint is dynamically generated based on the location information of the virtual viewpoint that needs to be synthesized, to directly generate the corresponding viewpoint image. This implements synthesis of a virtual viewpoint at any location between the plurality of existing viewpoint images, and improves subjective quality and synthesis efficiency of the virtual viewpoint.

In conclusion, the foregoing descriptions are merely example embodiments of the present invention, but are not intended to limit the protection scope of the present invention. Any modification, equivalent replacement, or improvement made within the spirit and principle of the present invention shall fall within the protection scope of the present invention.

**Claims**

1. A viewpoint image processing method, comprising:

   obtaining at least two first viewpoint images, wherein the at least two first viewpoint images comprise images respectively captured at at least two viewpoint locations;
   inputting the at least two first viewpoint images and location information of a to-be-synthesized second viewpoint image into a virtual viewpoint synthesis network, wherein the virtual viewpoint synthesis network is a network for synthesizing the second viewpoint image based on an adaptive convolution kernel corresponding to each pixel of the at least two first viewpoint images, the location information represents a viewpoint location of the second viewpoint image, the second viewpoint image is in a target area, and the target area comprises an area formed by the at least two first viewpoint images; and
   obtaining the second viewpoint image through calculation by using the virtual viewpoint synthesis network.

2. The method according to claim 1, wherein the obtaining the second viewpoint image through calculation by using the virtual viewpoint synthesis network comprises:

   obtaining a geometric feature matrix between the at least two first viewpoint images, wherein the geometric feature matrix is a matrix used to represent information about a geometric location relationship between pixels of the at least two first viewpoint images;
   generating the adaptive convolution kernel corresponding to each pixel of the at least two first viewpoint images based on the geometric feature matrix and the location information;
   generating at least two to-be-processed virtual composite pixel matrices based on the adaptive convolution kernels and the pixels of the at least two first viewpoint images; and
   synthesizing the second viewpoint image by using the at least two to-be-processed virtual composite pixel matrices.

3. The method according to claim 2, wherein the obtaining a geometric feature matrix between the at least two first viewpoint images comprises:

   extracting a feature from each of the at least two first viewpoint images to obtain at least two feature matrices;
   performing a cross-correlation operation on every two of the at least two feature matrices to obtain one or more feature matrices after the operation; and
   when one feature matrix after the operation is obtained, using the feature matrix after the operation as the geometric feature matrix; or when a plurality of feature matrices after the operation are obtained, obtaining the geometric feature matrix through calculation based on the plurality of feature matrices after the operation.

4. The method according to claim 2, wherein the obtaining a geometric feature matrix between the at least two first viewpoint images comprises:

   extracting a pixel from each of the at least two first viewpoint images to obtain at least two pixel matrices;
   composing the at least two pixel matrices into a hybrid pixel matrix; and
   inputting the hybrid pixel matrix into a first preset convolutional neural network model to obtain the geometric feature matrix.

5. The method according to any one of claims 2 to 4, wherein the location information of the to-be-synthesized second viewpoint image is coordinate values, and the generating the adaptive convolution kernel corresponding to each pixel of the at least two first viewpoint images based on the geometric feature matrix and the location information of the to-be-synthesized second viewpoint image comprises:

   extending the coordinate values into a location matrix whose quantities of rows and columns are the same as those of the geometric feature matrix;
   composing the location matrix and the geometric feature matrix into a hybrid information matrix;
   inputting the hybrid information matrix into each of at least two second preset convolutional neural network models, wherein the at least two second preset convolutional neural network models have a same structure and different parameters; and
   determining the adaptive convolution kernel corresponding to each pixel of the at least two first viewpoint images based on output results of the at least two second preset convolutional neural network models.

6. The method according to any one of claims 2 to 5, wherein the generating at least two to-be-processed virtual composite pixel matrices based on the adaptive convolution kernels and the pixels of the at least two first viewpoint images comprises:

performing convolution on the adaptive convolution kernel corresponding to each pixel of the at least two first viewpoint images and a pixel matrix with the pixel as a center in a one-to-one correspondence to obtain a virtual composite pixel corresponding to a pixel location of the pixel, wherein a quantity of rows of the pixel matrix is the same as that of the adaptive convolution kernel corresponding to the pixel, and a quantity of columns of the pixel matrix is the same as that of the adaptive convolution kernel corresponding to the pixel; and
composing the obtained virtual composite pixels into the at least two virtual composite pixel matrices.

7. A viewpoint image processing device, comprising a processor, a transceiver, and a memory, wherein the memory is configured to store a computer program and/or data, and the processor is configured to execute the computer program stored in the memory, so that the device performs the following operations:

obtaining at least two first viewpoint images, wherein the at least two first viewpoint images comprise images respectively captured at at least two viewpoint locations;
inputting the at least two first viewpoint images and location information of a to-be-synthesized second viewpoint image into a virtual viewpoint synthesis network, wherein the virtual viewpoint synthesis network is a network for synthesizing the second viewpoint image based on an adaptive convolution kernel corresponding to each pixel of the at least two first viewpoint images, the location information represents a viewpoint location of the second viewpoint image, the second viewpoint image is in a target area, and the target area comprises an area formed by the at least two first viewpoint images; and
obtaining the second viewpoint image through calculation by using the virtual viewpoint synthesis network.

8. The device according to claim 7, wherein the obtaining the second viewpoint image through calculation by using the virtual viewpoint synthesis network comprises:

obtaining a geometric feature matrix between the at least two first viewpoint images, wherein the geometric feature matrix is a matrix used to represent information about a geometric location relationship between pixels of the at least two first viewpoint images;
generating the adaptive convolution kernel corresponding to each pixel of the at least two first viewpoint images based on the geometric feature matrix and the location information;
generating at least two to-be-processed virtual composite pixel matrices based on the adaptive convolution kernels and the pixels of the at least two first viewpoint images; and
synthesizing the second viewpoint image by using the at least two to-be-processed virtual composite pixel matrices.

9. The device according to claim 8, wherein the obtaining a geometric feature matrix between the at least two first viewpoint images comprises:

extracting a feature from each of the at least two first viewpoint images to obtain at least two feature matrices;
performing a cross-correlation operation on every two of the at least two feature matrices to obtain one or more feature matrices after the operation; and
when one feature matrix after the operation is obtained, using the feature matrix after the operation as the geometric feature matrix; or when a plurality of feature matrices after the operation are obtained, obtaining the geometric feature matrix through calculation based on the plurality of feature matrices after the operation.

10. The device according to claim 8, wherein the obtaining a geometric feature matrix between the at least two first viewpoint images comprises:

extracting a pixel from each of the at least two first viewpoint images to obtain at least two pixel matrices;
composing the at least two pixel matrices into a hybrid pixel matrix; and
inputting the hybrid pixel matrix into a first preset convolutional neural network model to obtain the geometric feature matrix.

11. The device according to any one of claims 8 to 10, wherein the location information of the to-be-synthesized second viewpoint image is coordinate values, and the generating the adaptive convolution kernel corresponding to each pixel of the at least two first viewpoint images based on the geometric feature matrix and the location information of the to-be-synthesized second viewpoint image comprises:

extending the coordinate values into a location matrix whose quantities of rows and columns are the same as those of the geometric feature matrix;

composing the location matrix and the geometric feature matrix into a hybrid information matrix;

inputting the hybrid information matrix into each of at least two second preset convolutional neural network models, wherein the at least two second preset convolutional neural network models have a same structure and different parameters; and

determining the adaptive convolution kernel corresponding to each pixel of the at least two first viewpoint images based on output results of the at least two second preset convolutional neural network models.

12. The device according to any one of claims 8 to 11, wherein the generating at least two to-be-processed virtual composite pixel matrices based on the adaptive convolution kernels and the pixels of the at least two first viewpoint images comprises:

performing convolution on the adaptive convolution kernel corresponding to each pixel of the at least two first viewpoint images and a pixel matrix with the pixel as a center in a one-to-one correspondence to obtain a virtual composite pixel corresponding to a pixel location of the pixel, wherein a quantity of rows of the pixel matrix is the same as that of the adaptive convolution kernel corresponding to the pixel, and a quantity of columns of the pixel matrix is the same as that of the adaptive convolution kernel corresponding to the pixel; and

composing the obtained virtual composite pixels into the at least two virtual composite pixel matrices.

13. A viewpoint image processing device, comprising:

a first obtaining unit, configured to obtain at least two first viewpoint images, wherein the at least two first viewpoint images comprise images respectively captured at at least two viewpoint locations;

an input unit, configured to input the at least two first viewpoint images and location information of a to-be-synthesized second viewpoint image into a virtual viewpoint synthesis network, wherein the virtual viewpoint synthesis network is a network for synthesizing the second viewpoint image based on an adaptive convolution kernel corresponding to each pixel of the at least two first viewpoint images, the location information represents a viewpoint location of the second viewpoint image, the second viewpoint image is in a target area, and the target area comprises an area formed by the at least two first viewpoint images; and

a calculation unit, configured to obtain the second viewpoint image through calculation by using the virtual viewpoint synthesis network.

14. The device according to claim 13, wherein the calculating unit comprises:

a second obtaining unit, configured to obtain a geometric feature matrix between the at least two first viewpoint images, wherein the geometric feature matrix is a matrix used to represent information about a geometric location relationship between pixels of the at least two first viewpoint images;

a first generation unit, configured to generate the adaptive convolution kernel corresponding to each pixel of the at least two first viewpoint images based on the geometric feature matrix and the location information;

a second generation unit, configured to generate at least two to-be-processed virtual composite pixel matrices based on the adaptive convolution kernels and the pixels of the at least two first viewpoint images; and

a synthesis unit, configured to synthesize the second viewpoint image by using the at least two to-be-processed virtual composite pixel matrices.

15. The device according to claim 14, wherein the second obtaining unit comprises:

an extraction unit, configured to extract a feature from each of the at least two first viewpoint images to obtain at least two feature matrices;

a cross-correlation operation unit, configured to perform a cross-correlation operation on every two of the at least two feature matrices to obtain one or more feature matrices after the operation; and

a calculation unit, configured to: when one feature matrix after the operation is obtained, use the feature matrix after the operation as the geometric feature matrix; or when a plurality of feature matrices after the operation are obtained, obtain the geometric feature matrix through calculation based on the plurality of feature matrices after the operation.

**16.** The device according to claim 14, wherein the second obtaining unit comprises:

an extraction unit, configured to extract a pixel from each of the at least two first viewpoint images to obtain at least two pixel matrices;
a first composition unit, configured to compose the at least two pixel matrices into a hybrid pixel matrix; and
a first input unit, configured to input the hybrid pixel matrix into a first preset convolutional neural network model to obtain the geometric feature matrix.

**17.** The device according to any one of claims 14 to 16, wherein the location information of the to-be-synthesized second viewpoint image is coordinate values, and the first generation unit comprises:

an extension unit, configured to extend the coordinate values into a location matrix whose quantities of rows and columns are the same as those of the geometric feature matrix;
a second composition unit, configured to compose the location matrix and the geometric feature matrix into a hybrid information matrix;
a second input unit, configured to input the hybrid information matrix into each of at least two second preset convolutional neural network models, wherein the at least two second preset convolutional neural network models have a same structure and different parameters; and
a determining unit, configured to determine the adaptive convolution kernel corresponding to each pixel of the at least two first viewpoint images based on output results of the at least two second preset convolutional neural network models.

**18.** The device according to any one of claims 14 to 17, wherein the second generation unit comprises:

a convolution unit, configured to perform convolution on the adaptive convolution kernel corresponding to each pixel of the at least two first viewpoint images and a pixel matrix with the pixel as a center in a one-to-one correspondence to obtain a virtual composite pixel corresponding to a pixel location of the pixel, wherein a quantity of rows of the pixel matrix is the same as that of the adaptive convolution kernel corresponding to the pixel, and a quantity of columns of the pixel matrix is the same as that of the adaptive convolution kernel corresponding to the pixel; and
a third composition unit, configured to compose the obtained virtual composite pixels into the at least two virtual composite pixel matrices.

**19.** A computer-readable storage medium, wherein the computer-readable storage medium stores a computer program, and when the computer program is executed by a processor, the method according to any one of claims 1 to 6 is implemented.

**20.** A chip, wherein the chip comprises a central processing unit, a neural network processor, and a memory, and the apparatus is configured to perform the method according to any one of claims 1 to 6.

FIG. 1

FIG. 2

FIG. 3

EP 4 024 343 A1

FIG. 4

EP 4 024 343 A1

FIG. 5

FIG. 6

700

Data collection device 760

Data flow

Database 730

Data flow

Training device 720

Execution device 710

Data flow

Client device 740

Input data

I/O interface 712

Target model/rule 701

Output result

Calculation module 711

Data storage system 750

Preprocessing module 713

Preprocessing module 714

FIG. 7

Neural
network
layer 830

Output layer 840

Hidden layer n (83n)

Hidden layer 2 (832)

Hidden layer 1 (831)

Convolutional
neural network
(CNN) 800

Convolutional
layer/Pooling
layer 220

826

825

824

823

822

821

Input layer 810

To-be-processed
image

FIG. 8

Neural network processor 90

Instruction fetch memory 909

Controller 904

Weight memory 902

Operation circuit 903

Accumulator 908

Input memory 901

Vector calculation unit 907

Unified memory 906

Memory cell access controller 905

Bus interface unit 910

Master CPU

External memory

FIG. 9

Method 1000

S1001: Obtain a plurality of existing viewpoint images and location information of a to-be-synthesized virtual viewpoint image

S1002: Obtain a pixel matrix of each of the plurality of existing viewpoint images

S1003: Obtain a cross-correlation feature matrix through calculation based on the plurality of pixel matrices

S1004: Generate, based on the cross-correlation feature matrix and the location information of the to-be-synthesized virtual viewpoint, a plurality of to-be-processed virtual composite pixel matrices whose quantity is the same as that of the plurality of existing viewpoint images

S1005: Synthesize the virtual viewpoint image based on the plurality of to-be-processed virtual composite pixel matrices

S1006: Calculate, by using a loss function, a loss value between the synthesized virtual viewpoint image and an image that is actually shot at a location of the to-be-synthesized virtual viewpoint image, and adaptively adjust parameters of convolutional neural network models in a representation network, a generation network, and a correction network based on the loss value

S1007: Continually repeat operations of steps 1001 to 1006 until a loss value between a virtual viewpoint image finally output by an entire virtual viewpoint synthesis network and an actual image at a location corresponding to the virtual viewpoint image is less than a threshold

FIG. 10

FIG. 11

Method 1200

```
┌─────────────────────────────────────────────────────────────────┐
│    S1201: Obtain a preset quantity of first viewpoint images      │
└─────────────────────────────────────────────────────────────────┘
                                │
                                ▼
┌─────────────────────────────────────────────────────────────────┐
│  S1202: Obtain a cross-correlation feature matrix between the      │
│           preset quantity of existing viewpoint images            │
└─────────────────────────────────────────────────────────────────┘
                                │
                                ▼
┌─────────────────────────────────────────────────────────────────┐
│  S1203: Generate an adaptive convolution kernel corresponding to   │
│  each pixel of the preset quantity of existing viewpoint images    │
│  based on the cross-correlation feature matrix and location        │
│  information of a to-be-synthesized second viewpoint image         │
└─────────────────────────────────────────────────────────────────┘
                                │
                                ▼
┌─────────────────────────────────────────────────────────────────┐
│  S1204: Generate the preset quantity of to-be-processed virtual    │
│  pixel matrices based on the adaptive convolution kernels and the  │
│  pixels of the preset quantity of existing viewpoint images        │
└─────────────────────────────────────────────────────────────────┘
                                │
                                ▼
┌─────────────────────────────────────────────────────────────────┐
│  S1205: Synthesize the second viewpoint image based on the preset  │
│  quantity of to-be-processed virtual pixel matrices               │
└─────────────────────────────────────────────────────────────────┘
```

FIG. 12

FIG. 13

Hybrid information matrix

Generation network

Cross-correlation feature matrix

Location matrix

Model A → Adaptive convolution kernel corresponding to a viewpoint image A → Convolution calculation module → Virtual pixel matrix A

Model B → Adaptive convolution kernel corresponding to a viewpoint image B → Convolution calculation module → Virtual pixel matrix B

Model C → Adaptive convolution kernel corresponding to a viewpoint image C → Convolution calculation module → Virtual pixel matrix C

Model D → Adaptive convolution kernel corresponding to a viewpoint image D → Convolution calculation module → Virtual pixel matrix D

Adaptive convolution kernel corresponding to a pixel with a subscript [i][j] ⊗ Convolution — Pixel matrix that uses the pixel with the subscript [i][j] as a center and whose size is the same as that of the adaptive convolution kernel

FIG. 14

Viewpoint image processing device 1500

Transceiver unit — 1501

Processing unit — 1502

FIG. 15

Device 1600 for training a virtual viewpoint synthesis network

Memory 1601

Processor 1602

Bus 1604

Communications interface 1603

FIG. 16

Viewpoint image processing device 1700

Memory 1701

Processor 1702

Bus 1704

Communications
interface 1703

FIG. 17

## INTERNATIONAL SEARCH REPORT

| International application No. |
|---|
| **PCT/CN2020/095157** |

**A. CLASSIFICATION OF SUBJECT MATTER**

G06T 17/00(2006.01)i; G06N 3/02(2006.01)i

According to International Patent Classification (IPC) or to both national classification and IPC

**B. FIELDS SEARCHED**

Minimum documentation searched (classification system followed by classification symbols)

G06T,G06N

Documentation searched other than minimum documentation to the extent that such documents are included in the fields searched

Electronic data base consulted during the international search (name of data base and, where practicable, search terms used)

CNPAT, WPI, EPODOC, ISI, CNKI: 视点, 视角, 仿射, 变换, 几何, 偏移, 位移, 距离, 位置, 卷积, 神经网络, 自适应, 合成, 生成, 图, 两, 二, 双, viewpoint, affine, distance, position, convolution, CNN, image, two, dual

**C. DOCUMENTS CONSIDERED TO BE RELEVANT**

| Category* | Citation of document, with indication, where appropriate, of the relevant passages | Relevant to claim No. |
|---|---|---|
| Y | CN 108765549 A (CHENG, Xien) 06 November 2018 (2018-11-06) description paragraphs [0031]-[0064], figure 1 | 1, 7, 13, 19, 20 |
| Y | CN 110113593 A (NANKAI UNIVERSITY) 09 August 2019 (2019-08-09) description, paragraphs [0021]-[0028] | 1, 7, 13, 19, 20 |
| A | CN 109584340 A (SUZHOU GLISEE TECHNOLOGY CO., LTD.) 05 April 2019 (2019-04-05) entire document | 1-20 |
| A | CN 107945282 A (LUOYANG INSTITUTE OF INFORMATION TECH INDUSTRIES LUOYANG BRANCH INSTITUTE OF ICT) 20 April 2018 (2018-04-20) entire document | 1-20 |
| A | WO 2019031259 A1 (SONY CORPORATION) 14 February 2019 (2019-02-14) entire document | 1-20 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **26 August 2020** | **09 September 2020** |

| Name and mailing address of the ISA/CN | Authorized officer |
|---|---|
| **China National Intellectual Property Administration (ISA/ CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/095157**

| Patent document cited in search report | | | Publication date (day/month/year) | Patent family member(s) | | | Publication date (day/month/year) |
|---|---|---|---|---|---|---|---|
| CN | 108765549 | A | 06 November 2018 | None | | | |
| CN | 110113593 | A | 09 August 2019 | None | | | |
| CN | 109584340 | A | 05 April 2019 | None | | | |
| CN | 107945282 | A | 20 April 2018 | None | | | |
| WO | 2019031259 | A1 | 14 February 2019 | CN | 110998669 | A | 10 April 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2019109012191